**Europäisches Patentamt**

**European Patent Office**

**Office européen des brevets**

(19)

(11) Numéro de publication : **0 675 662 A1**

## (12) DEMANDE DE BREVET EUROPEEN

(21) Numéro de dépôt : **95400682.1**

(22) Date de dépôt : **28.03.95**

(51) Int. Cl.⁶ : **H04Q 7/36**

(30) Priorité : **30.03.94 FR 9403783**

(43) Date de publication de la demande :
**04.10.95 Bulletin 95/40**

(84) Etats contractants désignés :
**DE**

(71) Demandeur : **TELEDIFFUSION DE FRANCE**
**10, rue d'Oradour sur Glane**
**F-75732 Paris Cédex 15 (FR)**

(72) Inventeur : **Ellatifi, Abdelkader**
**Centre Universitaire,**
**Ile de Saulcy**
**F-57045 Metz (FR)**

(74) Mandataire : **Fréchède, Michel et al**
**Cabinet Plasseraud**
**84, rue d'Amsterdam**
**F-75009 Paris (FR)**

(54) **Réutilisation tridimensionelle des fréquences dans un système cellulaire radio-mobile.**

(57) L'invention concerne un procédé d'intercommunication par radiotéléphonie mobile.

L'espace d'intercommunication est assujetti à un pavage tridimensionnel en une pluralité de cellules d'intercommunication élémentaires. Une allocation d'un groupe de fréquences de transmission prédéterminé à chaque cellule d'intercommunication est effectuée, à deux cellules adjacentes étant alloué un groupe de fréquences distinct. La transmission de messages est effectuée sur l'une au moins des fréquences allouées à chacune des cellules d'intercommunication à partir de radiotéléphones mobiles associés à des objets meubles ou mobiles.

Application à l'intercommunication entre objets mobiles ou meubles.

**FIG.5c.**
ALLOCATION OPTIMALE POUR LE CUBE
SATISFAISANT À LA CONDITION DU CARRÉ ET CUBE LATIN

EP 0 675 662 A1

Jouve, 18, rue Saint-Denis, 75001 PARIS

L'invention est relative à un procédé d'intercommunication par radiotéléphonie mobile en réseau tridimensionnel, et au réseau correspondant.

L'intercommunication par radiotéléphonie mobile a, jusqu'à ce jour, été essentiellement réservée à des mobiles effectifs munis de dispositifs de radiotéléphonie, ces mobiles effectifs consistant essentiellement en des véhicules terrestres amenés à se déplacer dans un espace sensiblement bi-dimensionnel.

Pour cette raison, des réseaux bi-dimensionnels de radiotéléphonie mobile ont jusqu'ici été développés, ces réseaux comportant essentiellement une subdivision d'une zone d'intercommunication en un ensemble de cellules élémentaires adjacentes, chaque cellule élémentaire comportant une station de base émetteur-récepteur.

A chaque station de base est alloué un groupe de fréquences d'émission-réception. La station de base est placée au barycentre de chaque cellule, afin de constituer une répétition de motifs formés par chaque cellule élémentaire à laquelle le groupe de fréquences d'émission-réception est attribué. La répétition des motifs doit être telle que deux cellules élémentaires identiques, tant par leur forme géométrique que par le groupe de fréquences d'émission-réception, doivent être séparées par une distance maximale, afin de réduire les risques d'interférence entre mobiles distincts.

Ainsi, des études antérieures ont montré que les seuls polygones réguliers, destinés à matérialiser chaque cellule élémentaire, permettant d'assurer un pavage régulier d'une zone bi-dimensionnelle d'intercommunication en radiotéléphonie mobile, sont le triangle, le carré et l'hexagone. Ces études ont également montré que, parmi ceux-ci, l'hexagone est celui qui répond le mieux aux conditions d'optimisation de l'utilisation du spectre des fréquences lors de l'alloca-tion des groupes de fréquences pour constituer un réseau correspondant.

Pour une illustration de ce type de réseau, on pourra consulter utilement la demande de brevet européen N° 0470 831 publiée le 12.02.1992, Bulletin 92/07.

Ce type de réseau donne toute satisfaction dans l'application à laquelle celui-ci est limité.

La présente invention a pour objet la mise en oeuvre d'un procédé d'intercommunication par radiotéléphonie mobile en réseau tridimensionnel.

Un autre objet de la présente invention est la mise en oeuvre d'un procédé d'intercommunication par radiotéléphonie mobile lequel, bien que susceptible d'être utilisé avec tous types de mobiles, tels que des véhicules terrestres, aéronefs ou sous-marins, est cependant plus particulièrement destiné à assurer l'intercommunication d'objets ou d'équipements meubles respectivement mobiles, munis d'un système de radiotéléphonie cellulaire, dans le cadre d'une enceinte tridimensionnelle limitée telle qu'un immeuble, un groupe d'immeubles ou autres, toute liaison par câble téléphonique ou réseau câblé d'intercommunication entre les différents objets meubles ou mobiles étant ainsi supprimée.

Un autre objet de la présente invention est également la mise en oeuvre d'un protocole d'allocation de fréquences ou groupes de fréquences pour un réseau de radiotéléphonie mobile tridimensionnel.

Un autre objet de la présente invention est enfin la mise en oeuvre d'un réseau tridimensionnel d'intercommunication par radiotéléphonie mobile correspondant.

Le procédé d'intercommunication par radiotéléphonie mobile selon l'invention, chaque radiotéléphone du réseau étant adapté pour émettre et recevoir des messages sur un ensemble de fréquences discrètes de valeurs déterminées, est remarquable en ce qu'il consiste, pour un espace d'intercommunication déterminé, à effectuer un pavage tridimensionnel de cet espace d'intercommunication, en une pluralité de cellules d'intercommunication, à effectuer une allocation d'un groupe de fréquences de transmission déterminé à chacune des cellules du pavage, à deux cellules adjacentes étant alloué un groupe de fréquences distinct. La transmission de messages est effectuée à partir des radiotéléphones mobiles sur l'une au moins des fréquences allouées à chacune des cellules d'intercommunication.

Le réseau d'intercommunication par radiotéléphonie mobile objet de la présente invention, chaque radiotéléphone mobile du réseau étant adapté pour émettre et recevoir des messages sur un ensemble de fréquences discrètes de valeurs déterminées, est remarquable en ce qu'il comprend un pavage tridimensionnel de l'espace d'intercommunication en une pluralité de cellules d'intercommunication, à chaque cellule d'intercommunication étant alloué un groupe de fréquences de transmission prédéterminées, deux cellules adjacentes étant munies d'un groupe de fréquences distincts, chaque cellule étant équipée en son centre d'une station de base d'émission-réception dans un groupe de fréquences allouées.

Le procédé et le réseau d'intercommunication par radiotéléphonie mobile objet de la présente invention trouvent application aux radiocommunications de véhicules de tout type, ainsi que, de manière plus spécifique, à l'interconnexion en réseau d'objets ou d'équipements meubles ou mobiles dans une enceinte tridimensionnelle déterminée.

Une description plus détaillée du procédé d'intercommunication par radiotéléphonie mobile, objet de la présente invention, sera donnée en liaison avec la description et les dessins ci-après dans lesquels :

- la figure 1a représente, de manière illustrative, leprocédé d'intercommunication par radiotéléphonie mobile en réseau tridimensionnel objet de la présente invention ;
- la figure 1b représente, à titre d'exemple purementillustratif, un agencement de cellules élémentaires adjacentes permettant la mise en oeuvre du procédé et la constitution du réseau tridimensionnel d'intercommunication par radiotéléphonie mobile objets de la présente invention ;
- les figures 2a à 2h représentent différents modes de réalisation particuliers de cellules élémentaires susceptibles de permettre la mise en oeuvre du procédé et du réseau de radiotéléphonie mobile objets de la présente invention ;

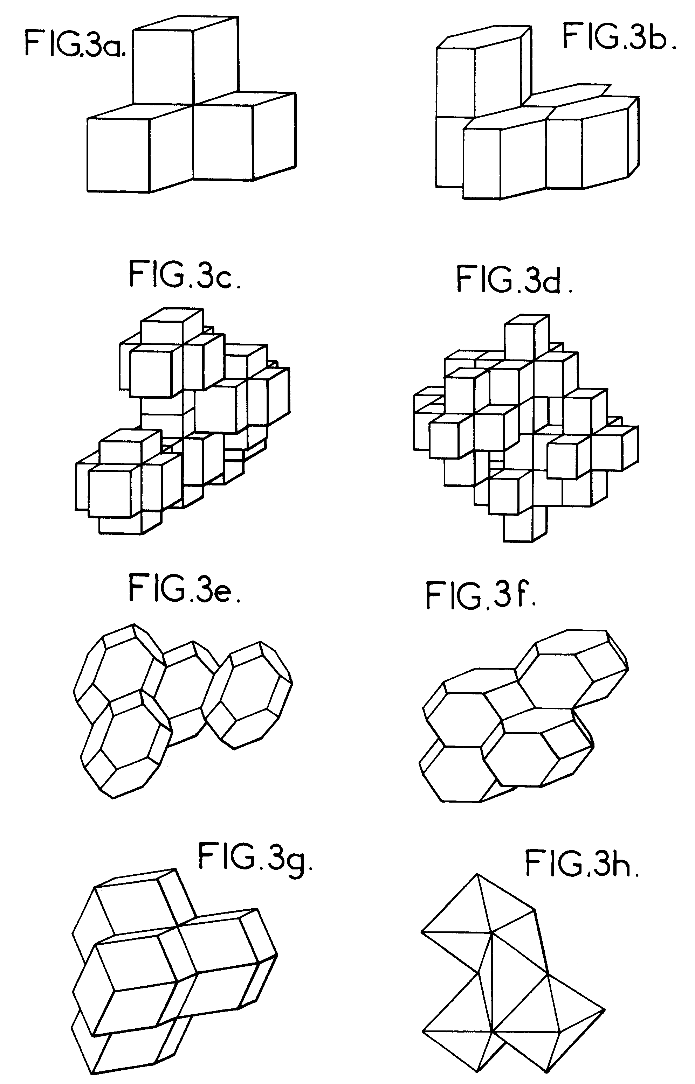

- les figures 3a à 3h représentent différents pavages tridimensionnels de l'espace d'intercommunication réalisés à partir des cellules élémentaires correspondantes représentées aux figures 2a à 2h ;
- les figures 4a et 4b représentent, en projection sur un plan, la trace d'un pavage tridimensionnel régulier respectivement pseudo-régulier ;
- la figure 5a représente, de manière illustrative, un protocole particulier d'allocation de fréquences dans un réseau de radiotéléphonie mobile tridimensionnel tel que représenté en figure 1a ou 2a à 2h ;
- les figures 5b à 5k représentent, de manière illustrative, différents protocoles d'allocation de fréquences dans des réseaux de radiotéléphonie mobile tridimensionnels tels que représentés en figure 3b à 3j ;
- les figures 6a à 6i représentent différents exemples de configurations d'allocations de fréquences pour des pavages tridimensionnels appliqués aux systèmes de radiotéléphonie mobile NMT, GSM ou DCS;
- les figures 7a et 7b représentent un réseau tridimensionnel de radiotéléphonie mobile, chaque cellule élémentaire étant munie d'une station de base à laquelle un groupe de fréquences d'intercommunication a été alloué, conformément au protocole d'allocation de fréquences objet de la présente invention.

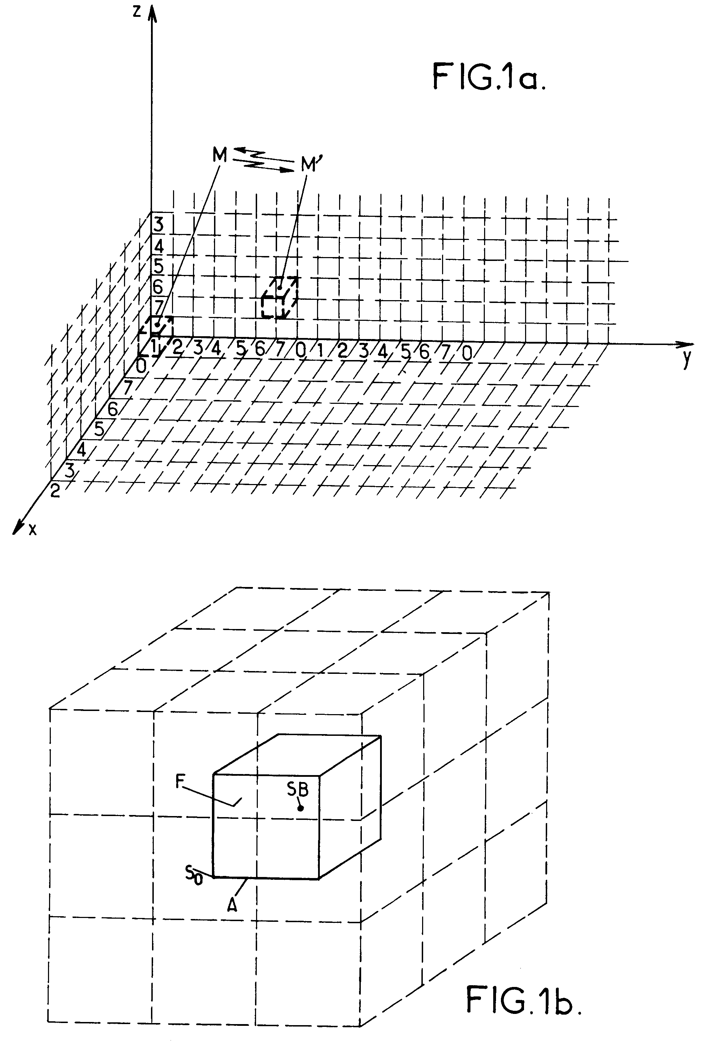

Une description plus détaillée d'un procédé d'intercommunication par radiotéléphonie mobile objet de la présente invention sera maintenant donnée en liaison avec les figures 1a, 1b et les figures suivantes.

D'une manière générale, on considère que chaque radiotéléphone est associé à un objet mobile ou meuble et adapté, de façon à émettre et recevoir des messages sur un ensemble de fréquences discrètes de valeurs déterminées, ceci conformément au processus classique d'intercommunication par radiotéléphonie mobile.

Ainsi que répresenté sur la figure 1a, on indique que, pour un espace d'intercommunication déterminé, cet espace étant repéré au moyen d'un repère orthonormé arbitraire OXYZ, le procédé objet de la présente invention consiste à effectuer un pavage tridimensionnel de cet espace d'intercommunication en une pluralité de cellules d'intercommunication élémentaires tridimensionnelles.

Sur la figure 1a, on indique qu'à titre d'exemple illustratif non limitatif, chaque cellule élémentaire est représentée par un cube de façon à ne pas surcharger inutilement le dessin.

Le pavage étant ainsi effectué, le procédé d'intercommunication selon l'invention consiste à effectuer une allocation d'un groupe de fréquences de transmission prédéterminé à chacune des cellules d'intercommunication du pavage. Bien entendu, afin de supprimer tout risque d'interférence entre cellules adjacentes, à deux cellules adjacentes est alloué un groupe de fréquences distinct.

Sur la figure 1a on indique que les chiffres mentionnés dans les cellules d'intercommunication élémentaires situées au voisinage des axes du repère OXYZ désignent un numéro de référence des groupes de fréquences considérés, chaque groupe de fréquences ayant un spectre déterminé distinct d'un groupe de cellules adjacentes.

Bien entendu, chaque cellule est munie d'une station de base, notée SB, placée sensiblement au centre de la cellule correspondante, chaque station de base comportant de manière classique des moyens émetteurs-récepteurs permettant d'émettre et recevoir les messages précédemment mentionnés sur un ensemble de fréquences discrètes de valeurs déterminées ainsi que précédemment mentionné dans la description.

Selon un aspect particulièrement avantageux du procédé d'intercommunication par radiotéléphonie mobile objet de la présente l'invention, celui-ci consiste alors à transmettre à partir des radiotéléphones mobiles associés à des mobiles M ou M' situés dans des cellules distinctes par exemple, une série de messages symbolisés par les flèches entre les références M et M' sur l'une au moins des fréquences allouées à chacune des cellules d'intercommunication. On indique bien sûr que les mobiles M ou M' peuvent être situés dans des cellules distinctes ou confondues.

Selon un aspect particulièrement avantageux du procédé d'intercommunication objet de la présente invention, on indique que le pavage précédemment mentionné consiste à subdiviser l'espace d'intercommunication en cellules d'intercommunication élémentaires, tridimensionnelles, deux cellules d'intercommunication élémentaires adjacentes, ainsi que représenté en figure 1b ayant au moins un sommet $S_o$, une arête A ou une face F en commun.

Dans le cas où, de façon non limitative, chaque cellule d'intercommunication élémentaire est constituée par un cube, ainsi que représenté en figure 1b, on indique qu'à une cellule donnée, représentée en traits pleins sur la figure 1b, correspondent en fait 26 cellules adjacentes, chacune de ces cellules étant représentée en traits mixtes.

D'une manière générale, on indique que les cellules peuvent avoir des dimensions quelconques ou, à tout le moins, des dimensions susceptibles d'adaptation en liaison avec la puissance d'émission des moyens émetteurs de chaque station de base SB, ainsi qu'il sera décrit ultérieurement dans la description.

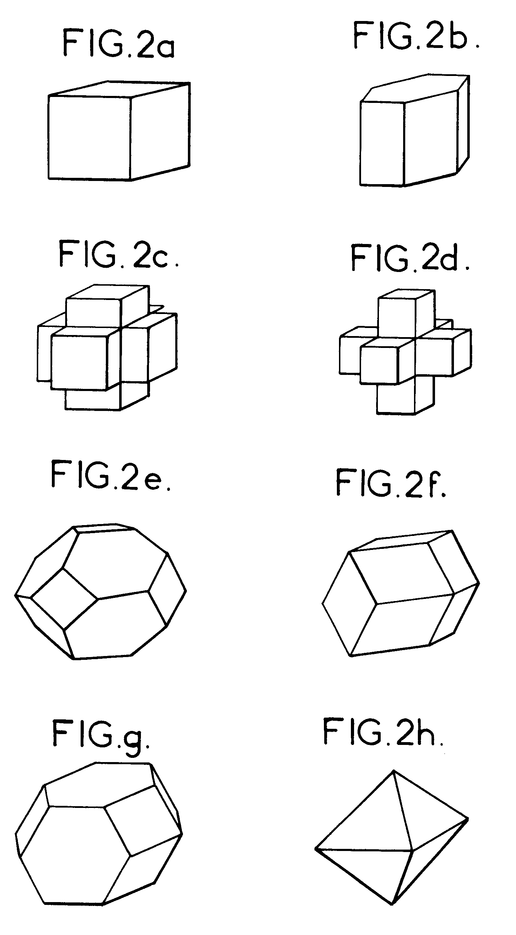

Selon un aspect particulièrement avantageux du procédé objet de la présente invention, on indique que, ainsi que représenté en figures 2a à 2h, les cellules d'intercommunication élémentaires appartiennent au groupe des volumes formé par le cube représenté en figure 2a, le cylindre hexagonal représenté en figure 2b, la double croix représentée en figure 2c et 2d, le cuboctaèdre représenté en figure 2e, le dodécaèdre rhomboïdal représenté en figure 2f, le dodécaèdre rhomboïdal étiré représenté en figure 2g, le cocube représenté en figure 2h ainsi que la pyramide et le tétraèdre venu de la pyramide.

En ce qui concerne les cellules en double croix représentées en figure 2c et 2d, on indique que celles-ci présentent respectivement une hauteur a et $\frac{3a}{2}$ où a désigne en fait la dimension carrée d'une face orthogonale à une branche de la croix.

Les pavages obtenus par la mise en oeuvre des cellules élémentaires d'intercommunication représentées en figure 2a à figure 2h sont représentés en figures correspondantes 3a à 3h.

D'une manière générale, on indique que les pavages tridimensionnels ainsi obtenus correspondent à la mise en coïncidence face à face de cellules élémentaires identiques ou au moins semblables ainsi qu'il sera décrit ultérieurement dans la description.

Parmi les pavages tridimensionnels ainsi réalisés, on indique que, bien que le pavage obtenu par la mise en oeuvre de cellules d'intercommunication en forme de double croix n'obéisse pas exactement à la condition fixée au départ relativement aux cellules adjacentes, les résultats d'allocation de fréquences permis par la mise en oeuvre de ce type de cellules sont suffisamment importants pour en justifier la description.

Le pavage tridimensionnel ayant ainsi été défini, le processus d'allocation de fréquences pour un tel pavage tridimensionnel consiste alors à définir un processus général d'allocation fixe de fréquences.

Le processus d'allocation fixe consiste à optimiser l'utilisation du spectre S d'une bande de fréquences B attribuée aux communications par radiotéléphonie mobile, la bande de fréquences B et le spectre S comportant N groupes de fréquences correspondants.

On désigne par $N = |S|$ le cardinal de S, c'est-à-dire le nombre de groupes de fréquences de l'ensemble du spectre S.

Lorsque N est pair, l'ensemble S s'écrit :

- S = { 0,1,2 ... , 2n }

et lorsque S est impair

- S = { 0,1,2,3 ..., 2n+1 }.

L'optimisation de l'allocation des groupes de fréquences consiste donc à optimiser l'entier naturel n représentatif du nombre de groupes N.

Dans les conditions précédemment citées, le processus d'allocation des fréquences pour le pavage tridimensionnel considéré, dans le cas d'une périodicité N, consiste alors à allouer un groupe de fréquences distinctes à chaque cellule d'intercommunication adjacentes dans une première direction de référence du pavage de l'espace d'intercommunication, la direction de référence Y'Y par exemple. Dans cette première direction de référence, les groupes de fréquences sont alloués par permutation avec une périodicité N = 2n+1 ou N = 2n+2. Cette périodicité signifie que tous les 2n+1 ou 2n+2 sauts du centre de la cellule de départ au centre des cellules suivantes dans cette direction de référence, on retrouve le même groupe de fréquences dont est dotée la cellule de départ pour les 2n+1 respectivement 2n+2 premières cellules successives suivant la première direction de référence YY'.

Le processus d'allocation de fréquences consiste alors à allouer un groupe de fréquences distinctes à chaque cellule d'intercommunication adjacente dans une deuxième direction de référence telle que la direction X'X du pavage de l'espace d'intercommunication. Selon cette deuxième direction de référence, les groupes de fréquences sont alloués avec une périodicité spatiale par permutation d'ordre m, m étant un entier, vérifiant la relation :

- m.r = 0 (mod $|S|$).

Dans cette relation, r est un entier tel que :

1 < r < N.

En ce qui concerne le processus d'allocation dans la troisième direction de référence Z'Z, on indique que celui-ci dépend de la régularité du pavage dans cette direction, le terme de régularité concernant l'absence d'existence ou l'existence d'un décalage de l'abscisse du centre des cellules utilisées dans le pavage tridimensionnel considéré le long d'une direction orthogonale à cette troisième direction de référence Z'Z.

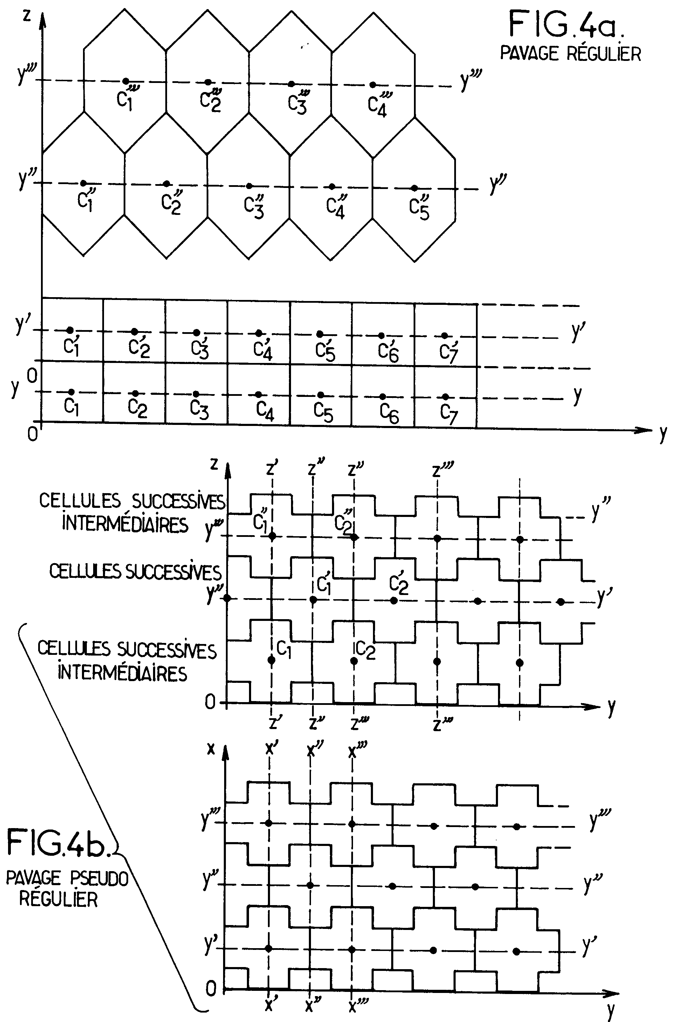

Le pavage est dit régulier lorsque, ainsi que représenté en figure 4a, les cellules successives dans une

4

direction de référence du pavage tridimensionnel, sont deux cellules adjacentes telles que la droite passant par le centre de ces cellules, la droite Y'Y' sur la figure 4a, est parallèle à la direction de référence OY sur cette même figure et qu'il n'existe aucune cellule décalée adjacente à ces cellules adjacentes. On indique qu'une cellule décalée présente un centre dont l'abscisse selon la direction de référence précitée, la direction OY sur la figure 4a, est comprise entre l'abscisse du centre des cellules successives précédemment mentionnées. Sur la même figure 4a, on a représenté, pour un pavage tridimensionnel de type cylindre hexagonal, les cellules successives dont le centre C"1 à C"5 est aligné selon la droite Y"Y" parallèle à la direction de référence OY et les cellules décalées dont les centres C'"1 à C'"4 sont alignés selon la droite Y'" Y'" parallèle à la même direction de référence OY, alors que dans le cas de cellules cubiques tel que représenté en figure 4a, il n'existe pas de cellules décalées, les centres des cellules étant alignés selon une direction perpendiculaire à la direction de référence OY.

Le pavage est dit pseudo-régulier lorsque celui-ci comporte des cellules successives et des cellules successives intermédiaires, ainsi que représenté en figure 4b dans le cas où, par exemple, chaque cellule élémentaire d'intercommunication est formée par une cellule en double croix de hauteur a. Dans un tel cas, deux cellules successives intermédiaires c1, c2 ou c"1, c"2 sont formées par rapport à des cellules successives c'1, c'2 de façon qu'une troisième cellule c'1 adjacente aux cellules successives c1 et c2 forme une cellule décalée comportant un centre c'1 dont l'abscisse, selon cette direction de référence, la direction OY, est comprise entre l'abscisse des cellules successives c'1 et c'2 selon cette même direction de référence OY. Les ordonnées des cellules successives intermédiaires, cellules c1, c2 respectivement c"1, c"2, après changement de repère centré sur le centre de la cellule successive c'1, dont l'abscisse par rapport à la direction de référence est la plus faible, sont respectivement positive et négative par rapport à une deuxième direction de référence Oz et une troisième direction de référence Ox ainsi que représenté en figure 4b. On indique bien sûr qu'en raison de la symétrie du pavage tridimensionnel et des cellules tridimensionnelles mises en oeuvre par rapport à leur centre, les motifs représentés en figure 4b peuvent être répétés dans le plan relatif aux deux directions de référence Ox et Oz non représentées sur cette figure.

Compte-tenu des caractéristiques du pavage tridimensionnel précédemment décrit, on indique que le processus d'allocation de fréquence du pavage précité dans le cas d'une périodicité p dans la direction YY', p entier positif tel que $p.s = 0 \mod |S|$, a pour objet de rechercher dans les trois directions de référence, des valeurs s, r, m de saut de fréquence entre cellules d'intercommunication adjacentes dans les directions précitées satisfaisant aux critères d'allocation, c'est-à-dire d'absence de risques d'interférence tout en minimisant le nombre de fréquences pour un spectre de fréquences donné.

Ainsi, le processus d'allocation de fréquences, pour un spectre S comportant N groupes de fréquences indépendants, N pair ou impair, N = 2n ou N = 2n+1, peut consister à allouer un groupe de fréquences distinct à chaque cellule d'intercommunication adjacente dans une première direction de référence, la direction Y'Y par exemple du pavage précité.

Les groupes de fréquences dans cette première direction sont alors choisis tels que les sauts de fréquence dans cette première directions aient pour valeur s, s entier tel que $s \in S = \{0, 1 \ldots 2n \text{ ou } 2n+1\}$ suivant le cardinal du spectre de fréquences choisi. Cette opération étant effectuée modulo le cardinal de S, il existe donc un entier $k_1$ tel que $k_1.s = o \mod |S|$.

Un processus semblable d'allocation peut alors être effectué relativement à chaque cellule d'intercommunication adjacente dans une deuxième direction de référence, la direction X'X par exemple du pavage tridimensionnel, les groupes de fréquences dans cette deuxième direction étant choisis tels que les sauts de fréquence aient pour valeur r, r entier tel que $r \in S = \{0, 1, \ldots 2n, \text{ ou } 2n+1\}$. Cette opération étant également effectuée modulo le cardinal de S, il existe un autre entier $k_2 \neq k_1$ tel que $k_2.r = o \mod |S|$. En général, on indique $r \neq s$, dans le cas d'un pavage formé par des cellules cylindre hexagonal ou cube, le cas r = s étant possible pour un pavage pseudo-régulier.

Dans le cas d'un pavage régulier, le saut de fréquence entre cellules successives dans la troisième direction de référence ZZ' est choisi entier pair de valeur 2m, vérifiant la relation $2m \in S = \{0, 1 \ldots 2n \text{ ou } 2n+1\}$ suivant le cardinal du spectre de fréquences considéré. Dans le cas d'un pavage pseudo-régulier, le saut de fréquence entre cellules successives dans cette troisième direction de référence ZZ' est choisi entier de valeur 4m-r+s vérifiant également la relation $4m-r+s \in S = \{0, 1 \ldots 2n \text{ ou } 2n+1\}$ précédemment citée.

Ainsi, compte tenu du processus d'allocation précité pour toute cellule d'intercommunication de base A et toute cellule d'intercommunication successive Ay, Ax, Az dans les première, deuxième et troisième directions de référence du pavage tridimensionnel, les lois définissant les valeurs de fréquences pour les groupes de fréquences successifs s'écrivent :

$$F(Ay) = F(A) + s$$
$$F(Ax) = F(A) + r$$

$$F(Az) = F(A) + \begin{cases} 4m-r+s & \text{pavage pseudo-régulier} \\ 2m & \text{pavage régulier} \end{cases}$$

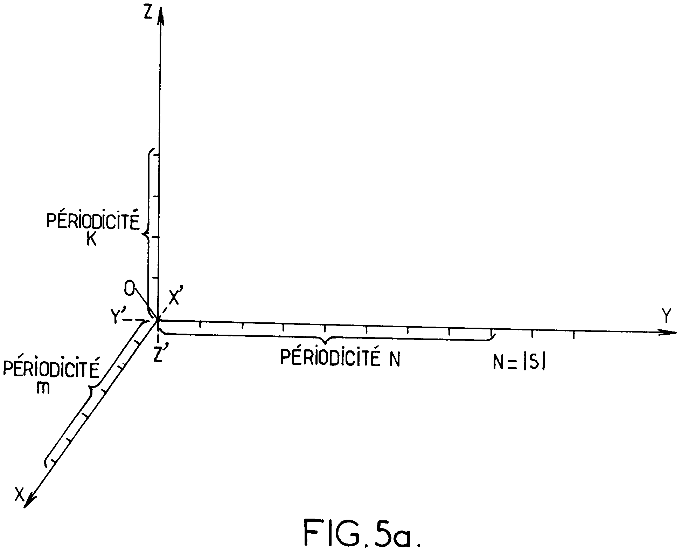

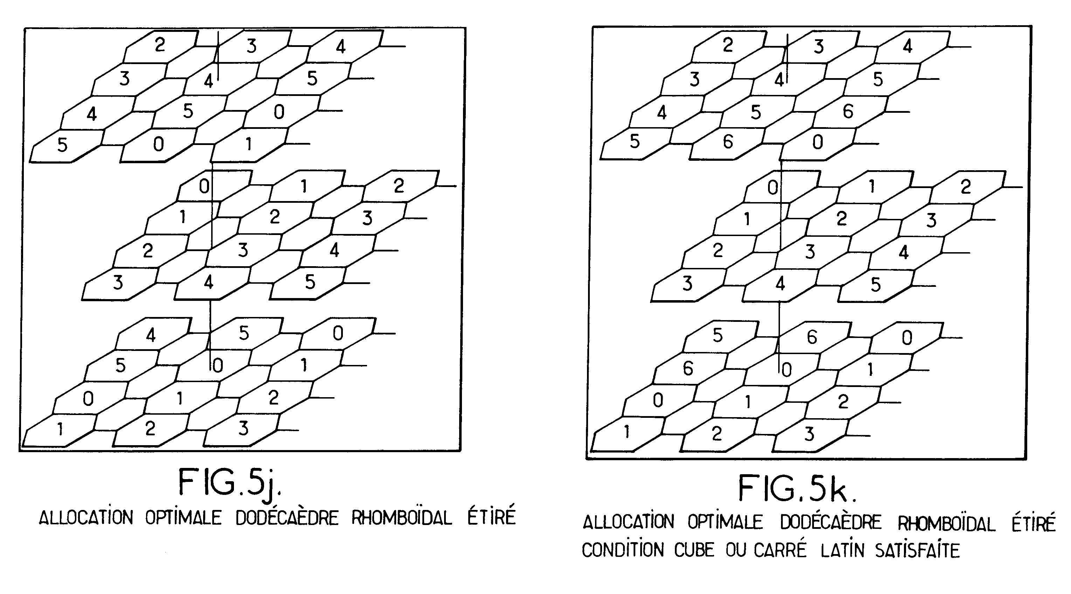

Compte tenu du pavage tridimensionnel de l'espace d'intercommunication ainsi réalisé, le processus d'allocation d'un groupe de fréquences à chaque cellule d'intercommunication de ce pavage peut consister alors, dans le cas du protocole particulier de périodicité N représenté en figure 5a, et pour un spectre S comportant N groupes de fréquences indépendants, N étant pair ou impair, à effectuer les étapes ci-après.

Une première étape consiste à allouer un groupe de fréquences distinctes à chaque cellule d'intercommunication adjacente dans une première direction de référence du pavage de l'espace d'intercommunication. La première direction de référence est par exemple, ainsi que représenté de façon non limitative en figure 5a, la direction Y'Y. Selon cette première direction de référence, les groupes de fréquences sont alloués par permutation avec une périodicité N, N pair = 2n+2 ou N impair = 2n+1 dans cette première direction de référence.

On comprend bien sûr que, dans cette direction, le pavage présentera, pour tout groupe de cellules adjacentes s'étendant selon la première direction, la périodicité N précitée.

Le processus d'allocation consiste alors à allouer un groupe de fréquences distinct à chaque cellule d'intercommunication adjacente dans une deuxième direction de référence du pavage de l'espace d'intercommunication. Cette deuxième direction, ainsi que représenté en figure 5a de manière illustrative non limitative, est par exemple la direction X'X de cet espace d'intercommunication. Selon cette deuxième direction de référence, les groupes de fréquences sont alloués avec une périodicité spatiale par permutation d'ordre m, m étant un nombre entier vérifiant la relation :

- $m.r = 0 \pmod{|S|}$

relation dans laquelle r est un entier tel que $1 < r < N$. On indique que, dans cette deuxième direction de référence, tout groupe de cellules alignées selon cette direction est ainsi doté de groupes de fréquences distinct de périodicité m selon la relation précédente.

Le processus d'allocation consiste enfin à allouer un groupe de fréquences distinct à chaque cellule d'intercommunication adjacente dans une troisième direction de référence, la direction Z'Z du pavage de l'espace d'intercommunication. Selon cette troisième direction de référence, les groupes de fréquences sont alloués en fonction de la qualité de pavage régulier ou de pavage pseudo-régulier tel que précédemment défini dans la description.

Dans le cas d'un pavage régulier, on indique que l'allocation des groupes de fréquences selon la troisième direction Z'Z précitée est effectuée avec une périodicité spatiale par permutation d'ordre k vérifiant la relation :

- $p.k = 0 \pmod{|S|}$

relation dans laquelle p est un entier tel que $1 < p < N$.

Pour un pavage pseudo-régulier au contraire, les groupes de fréquences sont alloués avec une périodicité spatiale avec permutation d'ordre 2k+r-1 vérifiant la relation :

- $p.(2k+r-1) = 0 \pmod{|S|}$.

Compte tenu des choix optimaux des valeurs des entiers p, r, et k, on obtient alors les lois générales de fréquences dans le pavage tridimensionnel correspondant de la manière ci-après.

Pour un pavage tridimensionnel considéré, le repère définissant les directions XX', YY', ZZ' peut par exemple, de manière arbitraire non limitative, être centré en une cellule que l'on considère comme cellule de base et à laquelle on associe par exemple le groupe de fréquences O arbitrairement.

Pour toute cellule élémentaire d'intercommunication A appartenant au pavage tridimensionnel, si F(A) est le groupe de fréquences associé à cette cellule suite à l'allocation considérée et si F(B), F(C) et F(D) sont les groupes de fréquences associés aux cellules B, C et D successives à la cellule A respectivement dans les directions XX' désignée précédemment par deuxième direction de référence, YY' désignée précédemment par première direction de référence et ZZ' désignée précédemment par troisième direction de référence, alors, on a les relations ci-après :

$F(B) = F(A) + r \bmod |S|$

$F(C) = F(A) + 1 \bmod |S|$

$F(D) = F(A) + k \bmod |S|$

si le pavage ne comporte pas de cellules élémentaires d'intercommunication décalées par rapport à la cellule élémentaire d'intercommunication A prise comme référence, ou :

$F(D) = F(A) + 2k+r-1 \bmod |S|$

si, au contraire, le pavage comporte des cellules décalées par rapport à la cellule de référence A, le pavage étant alors pseudo-régulier.

Le choix ou la détermination de N, nombre de groupes de fréquences nécessaires à l'allocation d'un pavage tridimensionnel donné, est effectué en tenant compte des cellules adjacentes à la cellule de base. Il est entendu que ces cellules adjacentes ne doivent pas avoir le même groupe de fréquences que la cellule de base précitée.

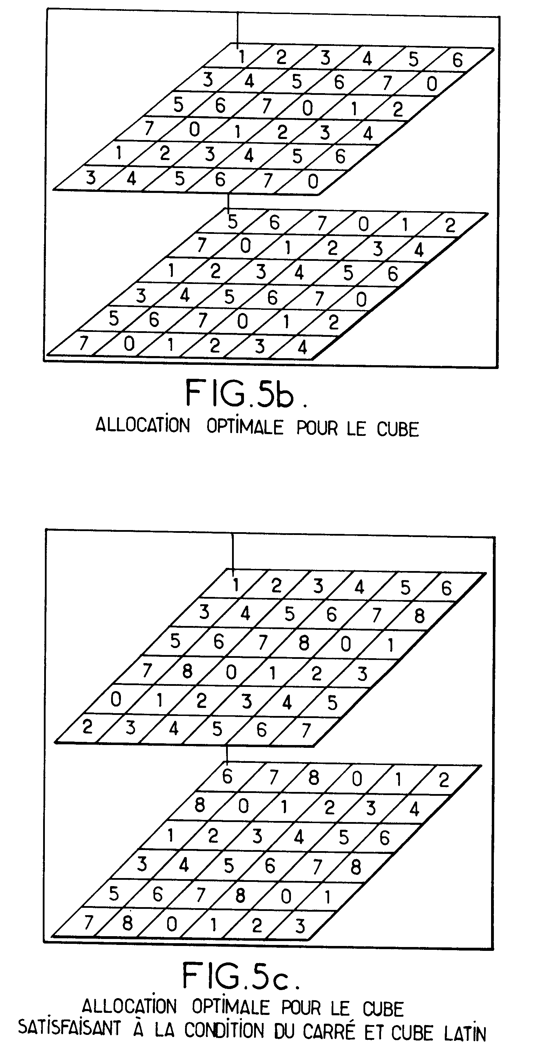

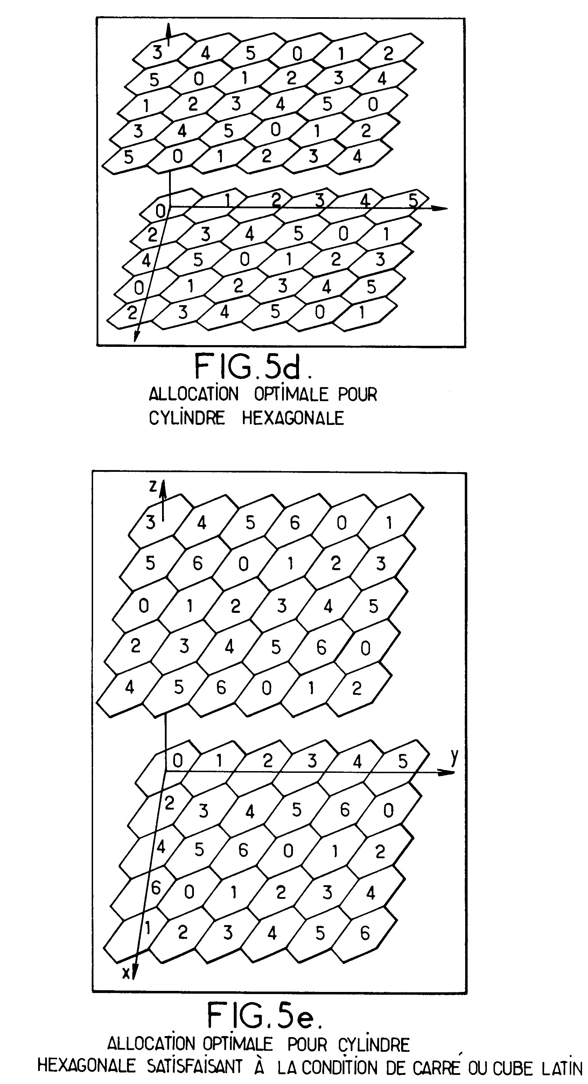

Différents exemples d'allocation de groupes de fréquences distincts dans le cas de différents pavages tridimensionnels spécifiques seront maintenant donnés en liaison avec les figures 5b à 5j. Dans les figures précitées, on indique que toutes les représentations des configurations et des allocations de fréquences sont représentées par des projections des plans parallèles aux plans OXY passant par les centres des cellules élémentaires d'intercommunication. Les chiffres figurant au centre de chaque cellule élémentaire d'intercommunication désignent les groupes de fréquences associés à chaque cellule correspondante.

Enfin, on rappelle, en référence au tableau ci-après, la condition relative aux carrés et cubes latins. Un carré latin est caractérisé par son ordre n. Un carré latin d'ordre n est donc un carré de n symboles qui sont toujours les n premiers entiers 0, 1, 2, n-1 ou les n premières lettres de l'alphabet vérifiant la propriété de n'apparaître qu'une et une seule fois dans chaque ligne et dans chaque colonne.

Les carrés latins auxquels il est ici fait référence sont obtenus en écrivant les n entiers ou lettres de l'alphabet dans leur ordre dans la première ligne et en complétant cycliquement les colonnes selon le tableau ci-après.

| A | B | C | D | E |
|---|---|---|---|---|
| B | C | D | E | A |
| C | D | E | A | B |
| D | E | A | B | C |
| E | A | B | C | D |

Le cube latin est une généralisation du carré latin en trois dimensions. Il s'agit donc d'un cube des n premiers entiers ou n premières lettres de l'alphabet qui vérifie la propriété du carré latin dans chaque projection suivant les trois plans X,Y, X,Z et Y,Z.

- Cellule élémentaire d'intercommunication constituées par un cube.

La figure 5b donne l'aspect tridimensionnel de l'allocation optimale lorsque la condition relative au carré ou au cube latin n'est pas satisfaite. Cette allocation utilise un spectre de huit groupes de fréquences numérotés de 0 à 7. La figure 5c représente l'allocation optimale pour des cellules élémentaires d'intercommunication constituées par un cube, cette allocation satisfaisant de plus à la condition du carré et du cube latin.

- Cellule élémentaire d'intercommunication constituée par un cylindre hexagonal.

La figure 5d représente l'allocation optimale lorsque chaque cellule élémentaire d'intercommunication est constituée par un cylindre hexagonal, la condition du cube ou du carré latin n'étant pas satisfaite. Dans un tel cas, cette allocation optimale utilise six groupes de fréquences numérotés de 0 à 5 ainsi que représenté en figure 5d. Lorsque la condition du carré ou du cube latin est satisfaite, ainsi que représenté en figure 5e, l'allocation optimale utilise sept groupes de fréquences numérotés de 0 à 6.

- Cellule élémentaire d'intercommunication constituée par un cuboctaèdre.

Dans un tel cas, ainsi que représenté en figure 5f, l'allocation optimale ne satisfaisant pas la condition du carré ou du cube latin, met en jeu un spectre à cinq groupes de fréquences numérotés de 0 à 4. Cette allocation est susceptible de vérifier la condition des carrés et cubes latins.

- Cellule élémentaire d'intercommunication constituée par une double croix.

D'une manière générale, on indique que la hauteur de la double croix est la distance entre son centre et le centre de l'une de ses faces les plus éloignées.

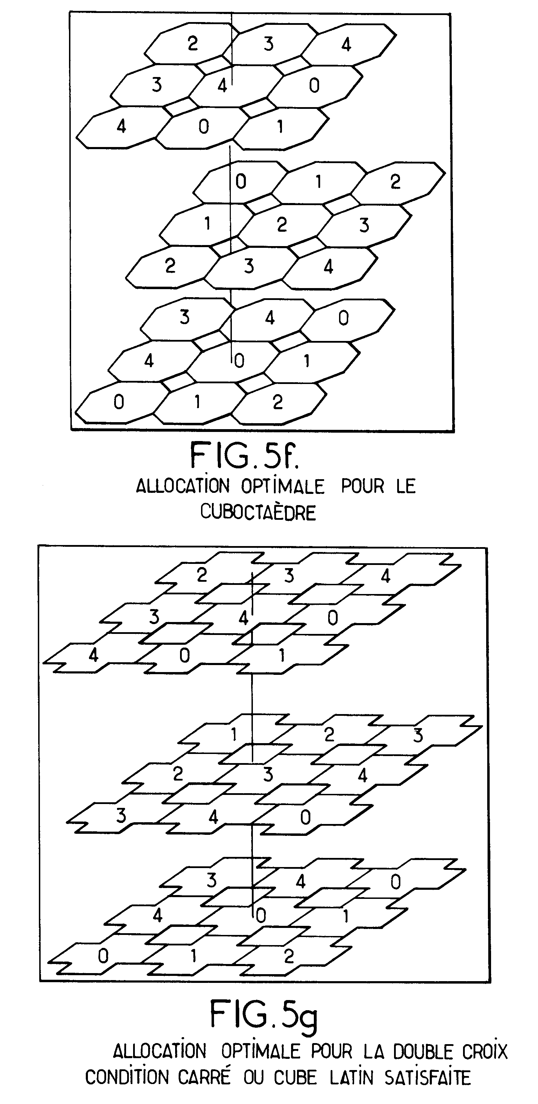

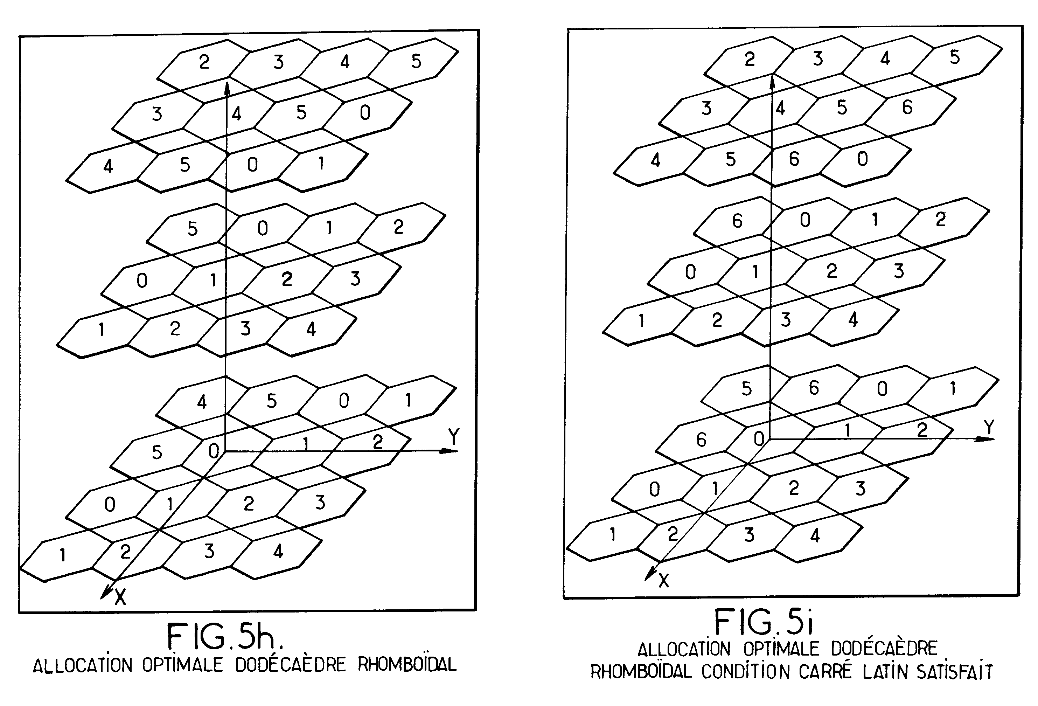

La figure 5g est relative à la double croix de hauteur a. Elle représente l'allocation optimale de groupes de fréquences et l'allocation correspondante donne des résultats analogues à l'allocation optimale obtenue lorsque la cellule élémentaire d'intercommunication est un cuboctaèdre. L'allocation optimale met en jeu cinq groupes de fréquences et, dans le cas de la figure 5g, on indique que la condition des carrés et cubes latins est satisfaite. Les groupes de fréquences sont notés de 0 à 4.

On indique en outre que, dans le cas de la double croix de hauteur $\frac{3a}{2}$ l'allocation permet aussi d'avoir un nombre de groupes de fréquences optimal N = 5.

- Cellule élémentaire d'intercommunication constituée par un dodécaèdre rhomboïdal.

Dans un tel cas, ainsi que représenté en figure 5h, l'allocation optimale est obtenue pour un nombre N = 6 de groupes de fréquences distincts. L'allocation représentée en figure 5h ne satisfait pas à la condition des carrés et cubes latins car dans la direction ZZ' on ne retrouve pas tous les groupes de fréquen-

7

ces du spectre considéré. En effet, dans cette direction, on retrouve en partant de la cellule de base à laquelle est affecté le groupe de fréquence 0, les groupes 0, 4, 1, 0, les groupes de fréquences 1, 3, 5 étant absents.

La figure 5i représente l'allocation optimale pour le dodécaèdre rhomboïdal dans le cas où la condition du carré latin est satisfaite. Cette allocation utilise sept groupes de fréquences numérotés de 0 à 6.

- Cellule élémentaire d'intercommunication constituée par un dodécaèdre rhomboïdal étiré :

Dans ce cas, ainsi que représenté en figure 5j, l'allocation est semblable au cas représenté en figure 5h dans lequel le pavage tridimensionnel est réalisé à partir de cellules élémentaires d'intercommunication formées par un dodécaèdre rhomboïdal. L'allocation optimale utilise six groupes de fréquences numérotés de 0 à 5. Dans ce cas, la condition des carrés et cubes latins n'est pas satisfaite.

La figure 5k représente l'allocation obtenue dans le cas où, au contraire, l'allocation optimale satisfait à la condition des carrés et cubes latins. Un nombre N = 7 de groupes de fréquences distincts numérotés de 0 à 6 est alors utilisé. Afin de réaliser un pavage tridimensionnel et une allocation correspondante de fréquences ou de groupes de fréquences tel que précédemment décrit, les groupes de fréquences peuvent alors être constitués dans des bandes de fréquences spécifiquement allouées à la communication par radiotéléphonie mobile de la façon ci-après, pour les systèmes de radiotéléphonie mobile NMT, GSM ou DCS.

Pour l'ensemble des systèmes précités, les différentes manières de concevoir le problème de l'allocation de fréquences sont les suivantes :

1) Configuration n'envisageant aucune évolution dans la taille des cellules tenant compte des interférences cocanales mais pas des interférences canaux adjacents (canaux 1-adjacents ou immédiatement adjacents).

2) Configuration n'envisageant aucune évolution dans la taille des cellules tenant compte des interférences cocanales et canaux adjacents.

3) Configuration envisageant une évolution dans la taille des cellules sans cohabitation de deux tailles différentes de cellules tenant compte des interférences cocanales mais pas des interférences canaux adjacents.

4) Configuration envisageant une évolution dans la taille des cellules sans cohabitation de deux tailles différentes de cellules tenant compte des interférences cocanales et canaux adjacents.

5) Configuration envisageant une évolution dans la taille des cellules avec cohabitation de deux ou plusieurs tailles différentes de cellules tenant compte des interférences cocanales mais pas des interférences canaux adjacents.

6) Configuration envisageant une évolution dans la taille des cellules avec cohabitation de deux ou plusieurs tailles de cellules tenant compte des interférences cocanales et canaux adjacents.

Les deux configurations (3) et (4) se ramènent en fait respectivement aux configurations (1) et (2), il suffit de reprendre la même allocation avec des cellules de taille plus petite. Des exemples donnés ci-après de ces deux sortes d'allocation pour le cuboctaèdre, le dodécaèdre rhomboïdal étiré, seront donnés ci-après.

a) Cas du cuboctaèdre.

Dans le cas du système de radiotéléphonie NMT, la bande de fréquences allouée est la suivante :

- pour l'émission 441,525 + n (0,025) à 443,525 MHz et pour la réception (ou vice versa) 451,525 + n (0,025) à 453,525 MHz. Ceci donne donc 80 fréquences.

a1) Lorsqu'on est dans la configuration (1) ou (2), l'allocation tridimensionnelle ne nécessite que 5 groupes de fréquences. On peut donc construire un plan d'allocation où les groupes sont des couples de 16 fréquences pour l'émission et 16 autres pour la réception arrangés, par exemple, de la façon suivante :

Les groupes sont en forme de couples : $(g_i, g'_i)$

$i = 1,....,5$ avec

$g_i = 441,5 + j(0,025)MHz = f_{i,k}$

$g'_i = 451,5 + j(0,025)MHz = f'_{i,k}$

et $j = i+5k; 0 \leq k \leq 15$

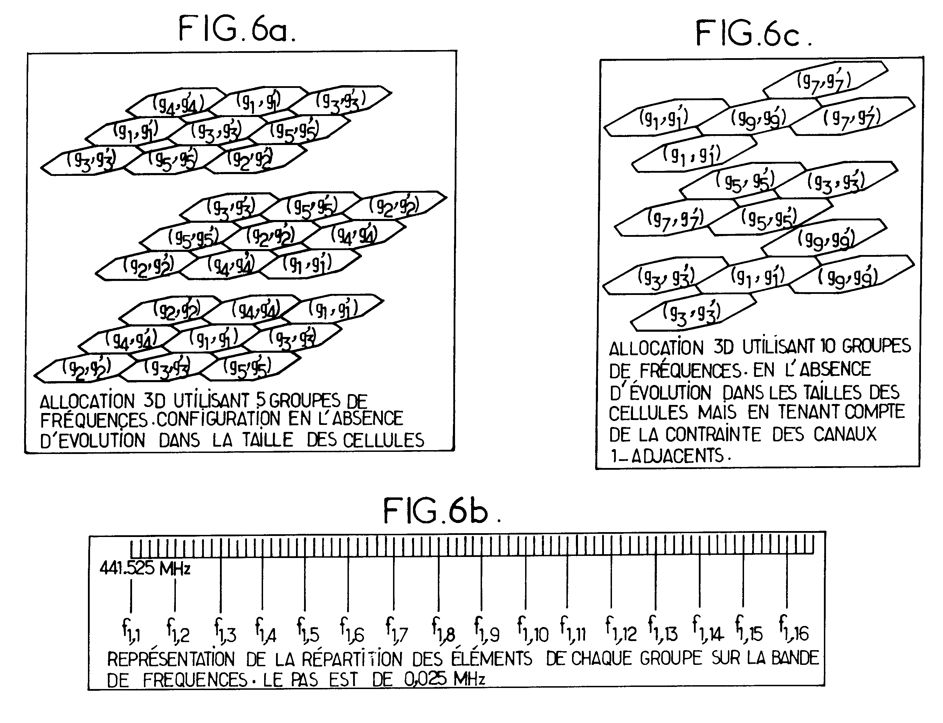

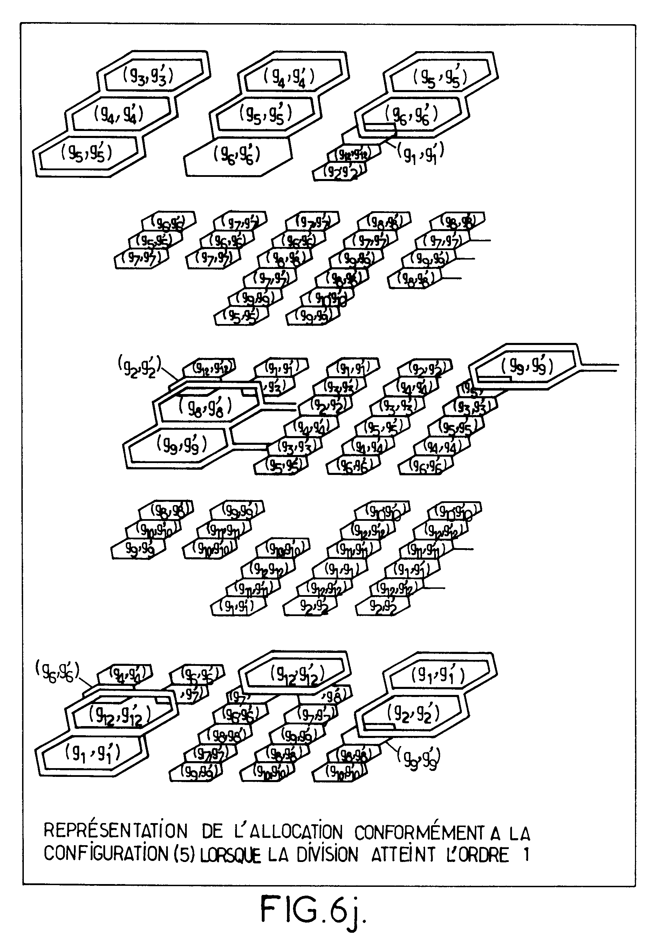

L'allocation a alors la forme représentée en figure 6a.

On remarque que dans le système NMT on peut utiliser le demi-canal si on respecte la contrainte d'interférence des canaux adjacents. Dans ce cas, la bande allouée devient plus grande, elle est alors formée de 159 fréquences. La configuration de l'allocation tridimensionnelle doit respecter les contraintes d'interférences cocanales et canaux directement adjacents, une telle configuration assurant une allocation optimale utilisant 10 groupes de fréquences.

a2) Lorsqu'on est dans la configuration (2) ou (4), les 10 groupes de fréquences nécessaires à l'allocation sont donc arrangés au moins des deux manières suivantes :

Des groupes de 15 fréquences pour l'émission et 15 autres pour la réception, définis de la manière sui-

vante :

$G_i = (g_i, g'_i)i = 1,2, ...,10$

$g_i = 441,5 + t(0,025)$ MHz

$g'_i = 451,5 + t(0,025)$ MHz

avec $t = i+10k$ et $0 \leq k \leq 14$

On remarquera qu'il reste 9 fréquences pour l'émission et 9 autres pour la réception qui ne sont pas utilisées par cette allocation. On peut les attribuer à un site arbitraire choisi. On a ainsi 9 groupes comportant 15 fréquences pour l'émission et 15 autres pour la réception, le 10ème groupe ayant 24 fréquences pour l'émission et 24 autres pour la réception.

La deuxième façon de former les groupes est de construire 9 groupes de 16 fréquences pour l'émission et 16 autres fréquences pour la réception. Le 10ème groupe contient seulement 15 fréquences pour la réception et 15 autres pour l'émission. Les groupes sont définis dans ce cas comme suit :

$G_i = (g_i, g'_i)i = 1,2, ...,9$

$g_i = 441,5 + t(0,025)$MHz

$g'_i = 451,5 + t(0,025)$MHz

avec $t = i+9k$ et $0 \leq k \leq 15$

Les fréquences qui restent sont attribuées au 10ème groupe.

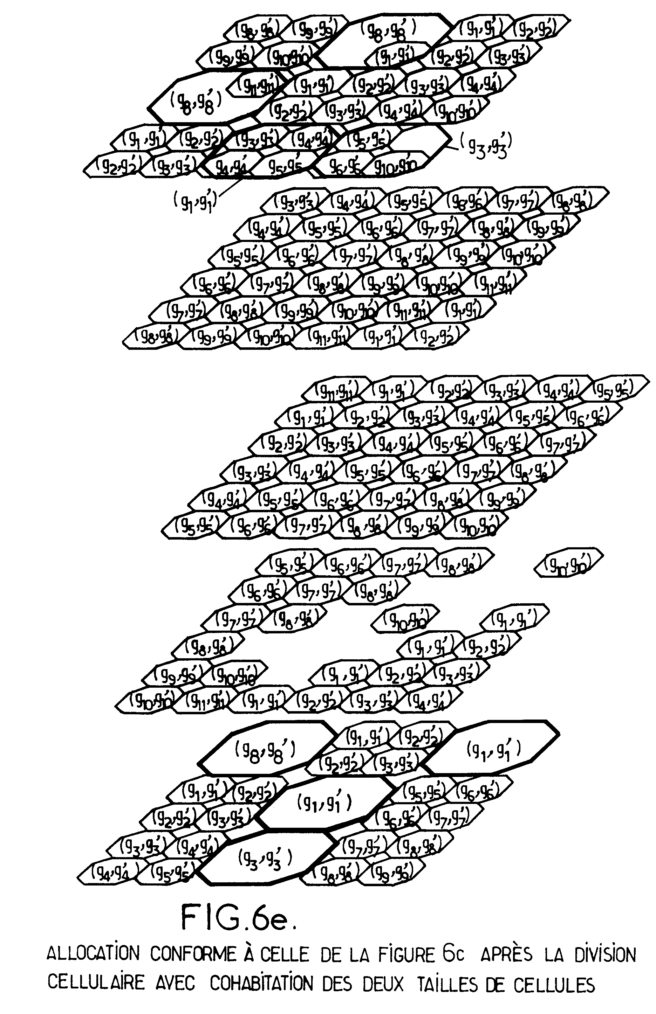

L'allocation présente l'aspect suivant, représenté en figure 6c.

Dans le cas où le plan d'allocation de fréquences requiert de prévoir une évolution dans les tailles des cellules avec une possible cohabitation de deux tailles de cellules, et qu'en plus une réallocation totale après la division cellulaire est à écarter, on est alors placé soit dans la configuration (5), soit dans la configuration (6).

Dans le premier cas (5), l'allocation tridimensionnelle nécessite 11 groupes de fréquences. Le nombre 80 n'étant pas divisible par 11, le plan d'allocation qu'on peut concevoir peut être constitué de groupes formés de 7 fréquences pour l'émission et 7 fréquences pour la réception. Les 3 fréquences pour l'émission et les 3 autres fréquences pour la réception qui restent peuvent être employées dans l'un des sites retenus.

Les groupes sont donc en forme de couples :

$(g_i, g'_i)i = 1,....,11$

avec $g_i = 441,5 + j(0,025)$MHz

$g'_i = 451,5 + j(0,025)$MHz

et $j = i+11k$ $0 \leq k \leq 6$

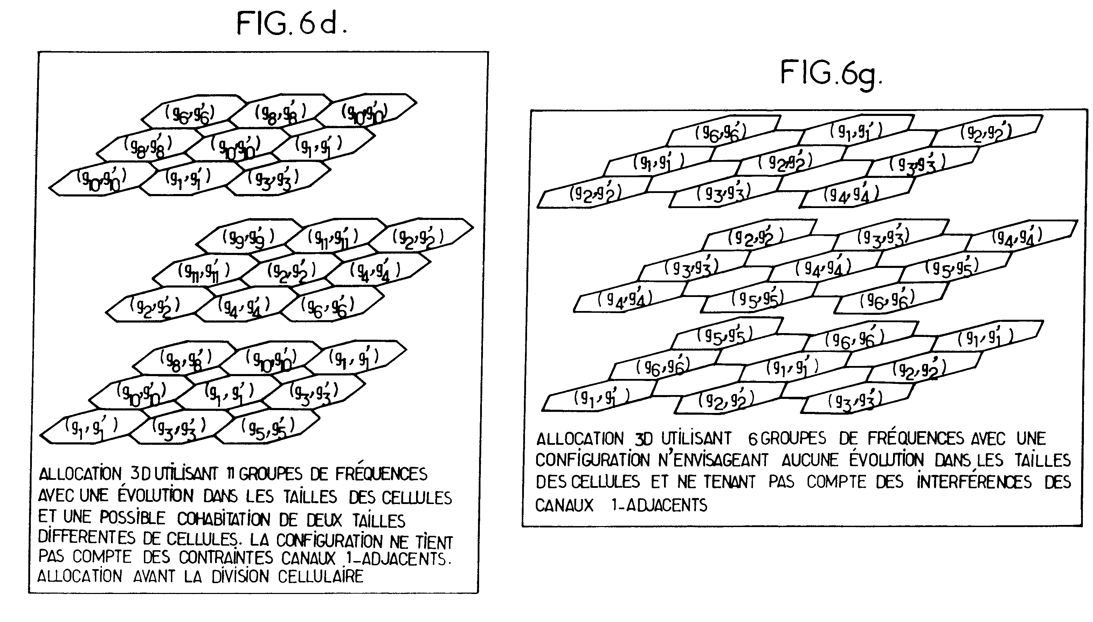

L'allocation dans le premier cas, lorsque la division est à l'ordre 0, cellules d'intercommunication de mêmes dimensions, est explicitée par la figure 6d. Quand la division atteint l'ordre 1 avec cohabitation de deux différentes tailles de cellules, l'allocation a l'aspect de la figure 6e.

Dans le cas du système de radiotéléphonie GSM, la bande allouée est la suivante :

```
890,2 + 0,2 (n-1) MHz    à    915 MHz    (émission)
                                 ↓(+45)
935,2 + 0,2 (n-1) MHz    à    960 MHz    (réception)
```

La bande est donc formée de 125 fréquences pour l'émission et 125 autres pour la réception.

Dans le premier cas où l'on utilise seulement 5 groupes de fréquences, comme dans le cas de la figure 6a en configuration (1) ou (3), les groupes sont formés de 25 fréquences pour l'émission et 25 autres pour la réception. Ils sont définis, par exemple, de la manière suivante :

$(g_i, g'_i)i = 1,...,5$

avec $g_i = 890 + j(0,2)$ MHz

$g'_i = 935 + j(0,2)$ MHz

et $j = i+5k$ $0 \leq k \leq 24$

L'allocation est celle représentée à la figure 6a précédente, mais les groupes sont ceux définis ci-dessus.

Dans le cas où l'on souhaite tenir compte de la contrainte portant sur les interférences des canaux immédiatement adjacents sans prévoir d'évolution dans la taille des cellules ou avec évolution de celle-ci mais sans cohabitation de tailles différentes de cellules, c'est-à-dire la configuration (2) ou (4), la bande reste formée de 125 fréquences car on ne peut pas utiliser dans le système GSM la propriété du demi-canal. Donc, les 10 groupes de fréquences nécessaires à l'allocation sont formés de 13 fréquences pour l'émission et 13 autres pour la réception, sauf l'un d'eux, qu'on choisit de façon arbitraire, ce groupe ne contenant que 8 fréquences pour l'émission et 8 autres pour la réception.

Les groupes sont définis comme suit :

$(g_i, g'_i)i = 1,...,9$

avec $g_i = 890 + j(0,2)$ MHz

$g'_i = 935 + j(0,2)$ MHz

et $j = i+9k$ $0 \leq k \leq 12$.

Les 8 fréquences pour l'émission et les 8 fréquences pour la réception qui restent sont attribuées au groupe arbitraire choisi. On peut aussi les construire de la manière suivante :

$(g_i, g'_i)i = 1,...., 10$

avec $g_i = 890 + j(0,2)$ MHz

$g'_i = 935 + j(0,2)$ MHz

et $j = i+10k$ $0 \leq k \leq 11$

L'un des groupes choisi suivant les normes acceptables contient en plus 5 fréquences pour l'émission et 5 autres pour la réception. L'allocation a l'aspect de la figure 6c avec les groupes que l'on vient de définir.

Dans le cas où la configuration prévoit une évolution dans la taille des cellules (sans contrainte sur les canaux immédiatement adjacents) avec possibilité de cohabitation de deux tailles différentes de cellules, configuration (5), les 11 groupes nécessaires à l'allocation peuvent être, par exemple, établis comme suit :

$(g_i, g'_i)i = 1,....,10$

avec $g_i = 890 + j(0,2)$ MHz

$g'_i = 935 + j(0,2)$ MHz

et $j = i+10k$ $0 \leq k \leq 10$

Le 11ème groupe contient les 15 fréquences d'émission et les 15 autres de réception qui restent. L'allocation utilisant ces groupes a l'aspect des figures 6d et 6e.

Dans le cas du système de radiotéléphonie DCS, la bande allouée est la suivante :

$1710,200 + (n-512)0,200$ MHz : $512 \leq n \leq 885$ pour l'émission

$1805,200 + (n-512)0,200$ MHz : $512 \leq n \leq 5885$ pour la réception

La bande est donc formée de 374 canaux pour l'émission et 374 autres pour la réception.

Dans le premier cas où l'allocation choisie utilise seulement 5 groupes de fréquences, cas de la figure 6a, configurations (1) et (3), les groupes sont formés de 75 fréquences pour l'émission et 75 autres pour la réception pour 4 d'entre eux, le 5ème groupe comporte 74 fréquences pour l'émission et 74 autres pour la réception. Ils sont définis, par exemple, de la manière suivante :

$(g_i, g'_i)i = 1,....,4$

avec $g_i = 1710,200 + j(0,2)$ MHz

$g'_i = 1805,200 + j(0,2)$ MHz

et $j = i+5k$ $0 \leq k \leq 74$

Le 5ème groupe comporte les fréquences qui restent de la bande.

L'allocation est celle représentée à la figure 6a précédente, mais les groupes sont ceux définis ci-dessus. Le système DCS ne permettant pas d'utiliser la propriété du demi-canal, la bande est donc formée de 374 fréquences dans le cas des configurations (2) et (4). Donc, les 10 groupes de fréquences nécessaires à l'allocation sont formés, par exemple, de 38 fréquences pour l'émission et 38 autres pour la réception, sauf l'un d'eux qu'on choisit de façon arbitraire, ce groupe ne contenant que 32 fréquences pour l'émission et 32 autres pour la réception. Les groupes sont définis comme suit :

$(g_i, g'_i)i = 1,....,9$

avec $g_i = 1710,200 + j(0,2)$ MHz

$g'_i = 1805,200 + j(0,2)$ MHz

et $j = i+9k$ $0 \leq k \leq 37$.

Les 32 fréquences pour l'émission et les 32 autres pour la réception qui restent sont attribuées au groupe arbitrairement choisi. L'allocation présente l'aspect de la figure 6c avec les groupes qu'on vient de définir.

Dans le cas où la configuration prévoit une évolution dans la taille des cellules, sans contrainte sur les canaux immédiatement adjacents avec possibilité de cohabitation de deux tailles différentes de cellules, configuration (5), les 11 groupes nécessaires à l'allocation peuvent être définis, par exemple, comme suit :

$(g_i, g'_i)i = 1,...., 11$

avec $g_i = 1710,200 + j(0,2)$ MHz

$g'_i = 1805,200 + j(0,2)$ MHz

et $j = i+11k$ $0 \leq k \leq 33$.

Le 10ème groupe contient les 8 fréquences d'émission et les 8 autres fréquences de réception qui restent. L'allocation utilisant ces groupes a l'aspect des figures 6d et 6e.

Dans le cas de la configuration (6), une allocation tridimensionnelle utilisant 23 groupes de fréquences et satisfaisant aux contraintes cocanales et canaux immédiatement adjacents est possible. Les groupes qu'il est possible de former suivant qu'on utilise les systèmes NMT, GSM ou DCS sont les suivants :

Dans le cas du système NMT avec utilisation du demi-canal, il est possible de former 22 groupes de 7 fréquences pour l'émission et 7 autres pour la réception, le 23ème groupe contenant 5 fréquences pour l'émission et 5 autres pour la réception. Les groupes sont par exemple formés de la manière suivante :

$(g_i, g'_i)i = 1,...., 22$

avec $g_i = 441,5 + j(0,025)$ MHz

$g'_i = 451,5 + j(0,025)$ MHz

et $j = i+22k \ 0 \leqq k \leqq 6$

Le 22ème groupe comporte les fréquences qui restent de la bande.

Dans le cas du système GSM, on peut par exemple former 22 groupes de 5 fréquences pour l'émission et 5 autres pour la réception, le 23ème groupe comportant 10 fréquences pour la réception et 10 autres pour l'émission.

Enfin, dans le cas du système DCS, les 22 groupes sont, par exemple, les suivants :

$(g_i, g'_i)i = 1,...., 22$

avec $g_i = 1710,200 + t(0,2)$ MHz

$g'_i = 1805,200 + t(0,2)$ MHz

et $t = i+22k \ 0 \leqq k \leqq 15$

Le 23ème groupe comporte 22 fréquences pour l'émission et 22 autres pour la réception.

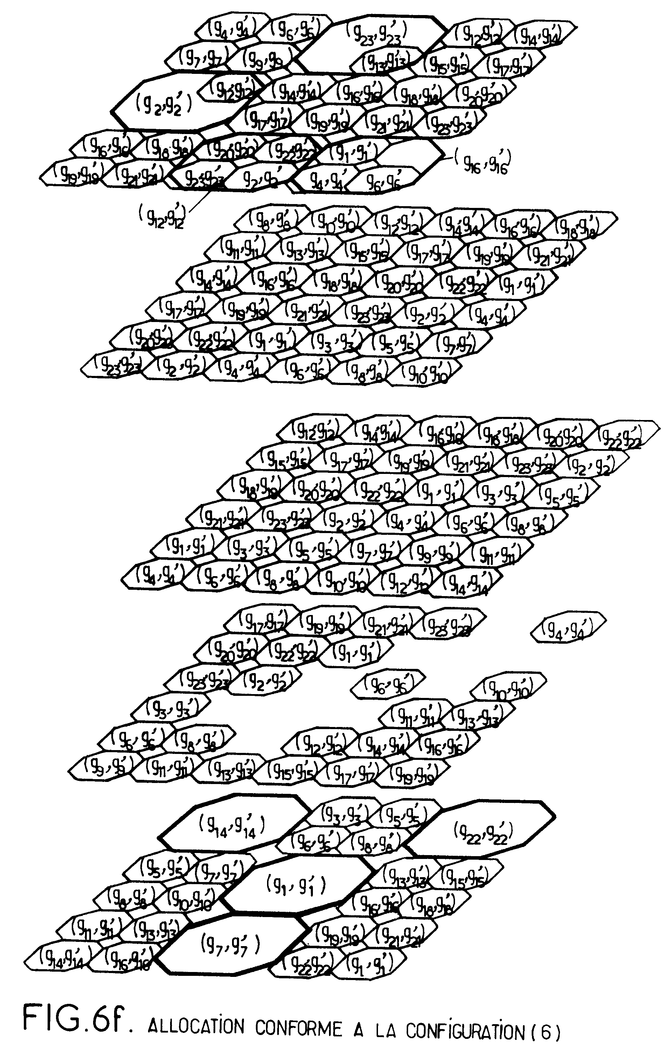

Toutes ces allocations associées aux différents cas de bandes considérées des systèmes NMT, GSM, DCS sont représentées par la figure 6f.

b) Cas du dodécaèdre rhomboïdal étiré

Dans ce cas, l'allocation optimale utilise 6 groupes de fréquences dans les configurations (1) et (3). La bande allouée par le système NMT comprend 80 fréquences pour l'émission et 80 autres pour la réception. Le nombre 80 n'étant pas divisible par 6, les 6 groupes peuvent être formés de plusieurs façons. On en propose deux à titre d'exemple.

Dans la première, on attribue à 5 des 6 groupes 14 fréquences pour l'émission et 14 autres pour la réception, le 6ème groupe ayant 10 fréquences pour l'émission et 10 autres pour la réception. Dans la deuxième, on forme 5 groupes de couples de 13 fréquences et le 6ème groupe dispose de 15 fréquences pour l'émission et 15 autres pour la réception.

On a donc dans le cas du premier exemple :

$(g_i, g'_i)i = 1,...., 5$

avec $g_i = 441,5 + j(0,025)$ MHz

$g'_i = 451,5 + j(0,025)$ MHz

et $j = i+6k \ 0 \leqq k \leqq 13$

Le sixième groupe contient le couple des 10 fréquences qui restent.

Dans le cas du deuxième exemple, les groupes sont les suivants :

$(g_i, g'_i)i = 1,...., 5$

avec $g_i = 441,5 + j(0,025)$ MHz

$g'_i = 451,5 + j(0,025)$ MHz

et $j = i+6k \ 0 \leqq k \leqq 12$

Le 6ème groupe contient le couple des 15 fréquences qui restent. L'allocation dans les deux cas a l'aspect de la figure 6g.

Lorsqu'on est dans le cas d'une configuration qui tient compte des interférences canaux immédiatement adjacents, configurations (2) et (4), l'allocation optimale nécessite 10 groupes de fréquences. Comme on tient compte de l'interférence des canaux adjacents, on peut utiliser le demi-canal, la bande est alors de 159 fréquences pour l'émission et le même nombre de fréquences pour la réception. Les groupes nécessaires à l'allocation peuvent donc être formés, par exemple, de la manière suivante, cette façon n'étant pas la seule possible :

$(g_i, g'_i)i = 1,...., 10$

avec $g_i = 441,5 + j(0,0125)$ MHz

$g'_i = 451,5 + j(0,0125)$ MHz

et $j = i+10k \ 0 \leqq k \leqq 15$

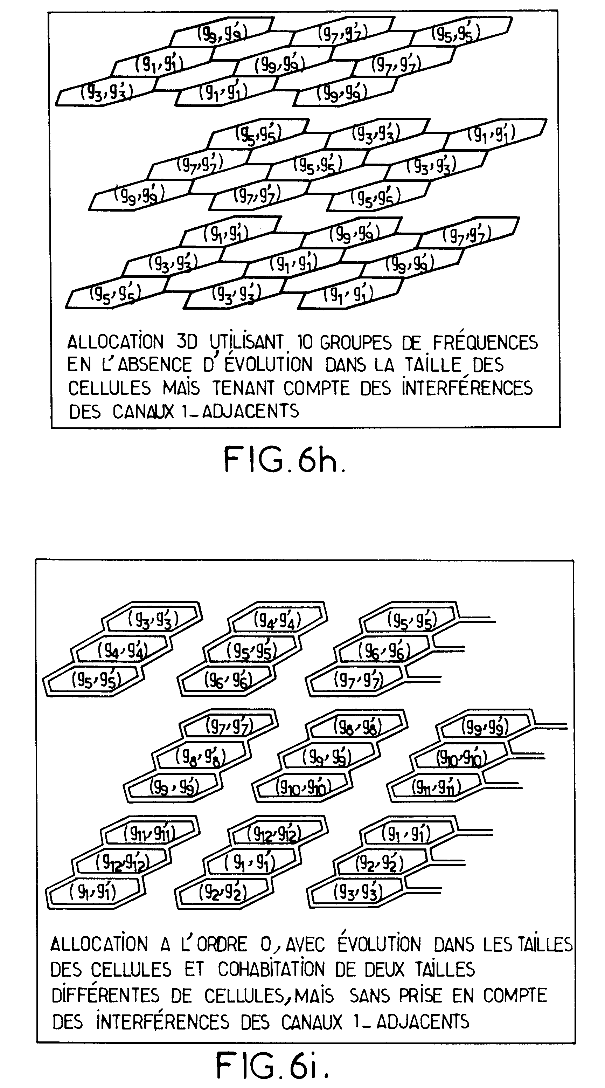

L'un des 10 groupes choisi de manière arbitraire, contient 24 fréquences pour l'émission et 24 autres pour la réception. La configuration est représentée par la figure 6h.

Lorsqu'on se trouve dans la configuration (5), l'allocation optimale nécessite 12 groupes de fréquences. Les groupes sont définis, par exemple, de la façon suivante :

$(g_i, g'_i)i = 1,...., 11$

avec $g_i = 441,5 + j(0,025)$ MHz

$g'_i = 451,5 + j(0,025)$ MHz

et $j = i+12k$ $0 \leqq k \leqq 5$

Le 12ème groupe contient le couple des 14 fréquences qui restent. L'allocation a l'aspect des figures 6i et 6j.

Dans le cas du système GSM, la bande allouée est formée de 125 fréquences pour l'émission et 125 autres pour la réception.

Dans le premier cas où l'allocation utilise seulement 6 groupes de fréquences, figure 6a, configurations (1) et (3), les groupes sont formés de 21 fréquences pour l'émission et 21 autres pour la réception, pour 5 d'entre eux, le 6ème groupe ne comportant que 19 fréquences pour l'émission et 19 autres pour la réception. Les groupes sont, par exemple, définis de la manière suivante :

$(g_i, g'_i)i = 1,....., 5$

avec $g_i = 890 + j(0,2)$ MHz

$g'_i = 935 + j(0,2)$ MHz

et $j = i+6k$ $0 \leqq k \leqq 20$

Le 6ème groupe comporte les fréquences qui restent de la bande. L'allocation est celle représentée à la figure 6a, mais les groupes sont ceux définis ci-dessus.

Dans le cas où l'on souhaite tenir compte de la contrainte portant sur les interférences des canaux immédiatement adjacents sans toutefois prévoir d'évolution dans la taille des cellules, ou en général lorsqu'on est dans l'une des configurations (2) ou (4), la bande comporte 125 fréquences. Donc, les 10 groupes de fréquences nécessaires à l'allocation sont, par exemple, formés de 13 fréquences pour l'émission et 13 autres pour la réception, sauf l'un d'eux, qu'on choisit de la façon arbitraire. Ce groupe arbitraire ne contient que 8 fréquences pour l'émission et 8 autres pour la réception. Les groupes sont définis comme suit :

$(g_i, g'_i)i = 1,....., 9$

avec $g_i = 890 + j(0,2)$ MHz

$g'_i = 935 + j(0,2)$ MHz

et $j = i+9k$ $0 \leqq k \leqq 12$

Les 8 fréquences pour l'émission et les 8 fréquences pour la réception qui restent sont attribuées au groupe arbitrairement choisi. L'allocation a l'aspect de la figure 6c avec les groupes qu'on vient de définir.

Dans le cas où la configuration prévoit une évolution dans la taille des cellules, sans contrainte sur les canaux immédiatement adjacents, avec possibilité de cohabitation de deux tailles différentes de cellules, configuration (5), les 12 groupes nécessaires à l'allocation sont définis, par exemple, comme suit :

$(g_i, g'_i)i = 1,....., 10$

avec $g_i = 890 + j(0,2)$ MHz

$g'_i = 935 + j(0,2)$ MHz

et $j = i+12k$ $0 \leqq k \leqq 9$

Le 12ème groupe contient les 14 fréquences d'émission et les 14 autres de réception qui restent. L'allocation utilisant ces groupes a l'aspect des figures 6d et 6e.

Dans le cas du système DCS, la bande est formée de 374 fréquences pour l'émission et de 374 autres pour la réception.

Dans le premier cas où l'allocation choisie utilise seulement 6 groupes de fréquences, figure 6a, les groupes sont formés de 62 fréquences pour l'émission et 62 autres pour la réception, pour 5 d'entre eux, le 6ème groupe comportant 64 fréquences pour l'émission et 64 autres la réception. Ils sont définis, par exemple, de la manière suivante :

$(g_i, g'_i)i = 1,....., 5$

avec $g_i = 1710,200 + j(0,2)$ MHz

$g'_i = 1805,200 + j(0,2)$ MHz

et $j = i+6k$ $0 \leqq k \leqq 61$

Le 6ème groupe comporte les fréquences qui restent de la bande. L'allocation est celle représentée à la figure 6a, mais les groupes sont ceux définis ci-dessus.

Dans le cas des configurations (2) et (4), les 10 groupes de fréquences nécessaires à l'allocation sont formés, par exemple, de 38 fréquences pour l'émission et 38 autres pour la réception, sauf l'un d'eux, qu'on choisit de la façon arbitraire. Ce groupe ne contient que 32 fréquences pour l'émission et 32 autres pour la réception. Les groupes sont définis comme suit :

$(g_i, g'_i)i = 1,....., 9$

avec $g_i = 1710,200 + j(0,2)$ MHz

$g'_i = 1805,200 + j(0,2)$ MHz

et $j = i+9k$ $0 \leqq k \leqq 37$

Les 32 fréquences pour l'émission et les 32 fréquences pour la réception qui restent sont attribuées au groupe choisi arbitrairement. L'allocation a l'aspect de la figure 6c avec les groupes qu'on vient de définir. Dans la configuration (5), les 12 groupes nécessaires à l'allocation sont définis, par exemple, comme suit :

$(g_i, g'_i)i = 1,...., 11$

avec $g_i = 1710,200 + j(0,2)$ MHz

$g'_i = 1805,200 + j(0,2)$ MHz

et $j = i+12k$ $0 \leqq k \leqq 30$

Le 12ème groupe contient les 33 fréquences d'émission et les 33 autres fréquences de réception qui restent. L'allocation utilisant ces groupes a l'aspect des figures 6d et 6e.

Bien entendu, les pavages tridimensionnels et les allocations précités permettent de constituer des réseaux tridimensionnels d'intercommunication par radiotéléphonie mobile de configurations très variées, ce qui permet une très grande souplesse d'utilisation à des fins diverses et notamment en vue d'assurer l'intercommunication entre objets meubles ou mobiles, munis bien entendu de moyens d'émission-réception, que ces objets meubles ou mobiles soient situés dans une cellule élémentaire d'intercommunication unique ou dans une pluralité de cellules d'intercommunication élémentaires constitutives d'un pavage tridimensionnel donné.

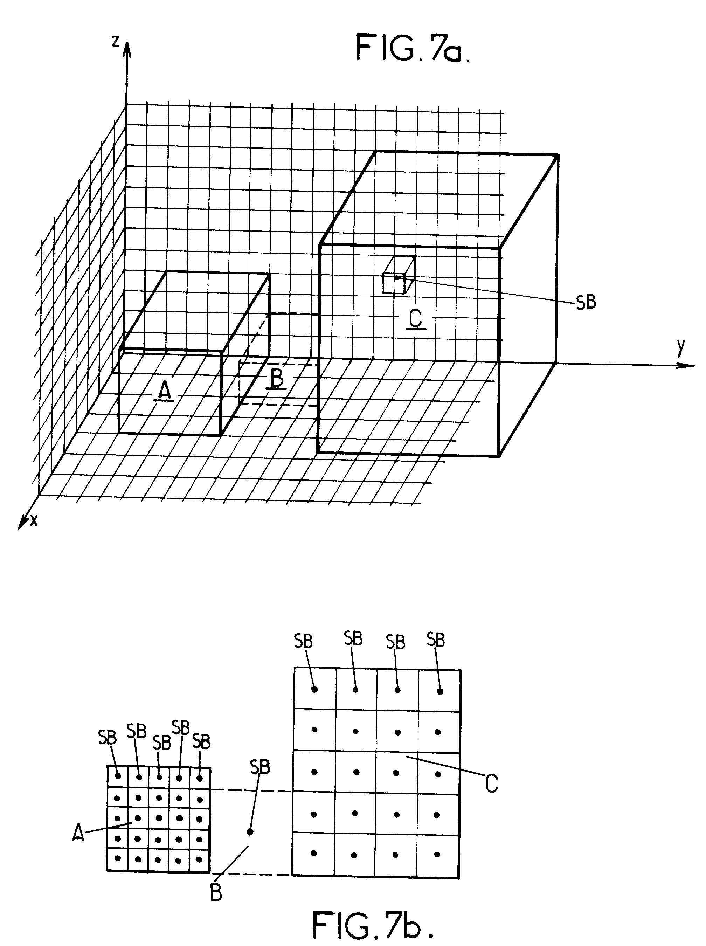

A ce titre, ainsi que représenté de manière simplement illustrative en figure 7a, un réseau tridimensionnel d'intercommunication en radiotéléphonie mobile conforme à l'objet de la présente invention peut comporter un pavage tridimensionnel de l'espace d'intercommunication selon une pluralité de cellules d'intercommunication élémentaires tridimensionnelles. De manière arbitraire non limitative, les cellules élémentaires d'intercommunication de l'espace d'intercommunication sont représentées par leur trace, pour une cellule élémentaire d'intercommunication cubique afin de simplifier la description, sur des plans de référence ox, oy, oz. Bien entendu, chaque cellule est munie d'une station de base SB émetteur-récepteur à laquelle est allouée un groupe de fréquences d'émission-réception de façon que, à deux cellules d'intercommunication élémentaires adjacentes, soit alloué un groupe de fréquences distinct. La station de base SB est représentée pour une seule cellule élémentaire d'intercommunication sur la figure 7a.

Ainsi qu'on l'a représenté de manière illustrative sur la figure 7a, l'espace d'intercommunication peut ainsi être subdivisé en sous-espaces d'intercommunication, chaque sous-espace ayant par exemple une unité fonctionnelle qui lui est propre. Les sous-espaces d'intercommunication sont notés A, B, C sur la figure 7a. On comprend par exemple que chaque sous-espace d' intercommunication peut avantageusement être constitué par un immeuble, un groupe d'immeubles ou analogue.

De manière non limitative, on indique que chaque sous-espace comporte un pavage tridimensionnel spécifique comprenant au moins une cellule d'intercommunication élémentaire d'un type déterminé. Dans le but d'économiser les groupes de fréquences alloués, il est bien entendu envisageable d'attribuer à un sous-ensemble d'intercommunication une seule cellule à laquelle un seul groupe de fréquences est attribué.

Cependant, et d'une manière avantageuse, on indique que toutes les cellules d'intercommunication élémentaires formant les espaces d'intercommunication ou les sous-espaces précités sont semblables et d'un même type. Par cellule semblable, on entend que les cellules d'intercommunication ont une même forme générale telle que précédemment décrite dans la description.

Ainsi qu'on l'a en outre représenté en figure 7b et de manière particulièrement avantageuse, on comprend que les cellules élémentaires d'intercommunication semblables peuvent avantageusement être homothétiques par rapport à leur centre. Dans ce cas, chaque station de base comporte un émetteur dont le rapport de puissance d'émission pour des cellules homothétiques est fonction du rapport d'homothétie considéré.

On a ainsi décrit un procédé d'intercommunication par radiotéléphonie mobile et un réseau de radiotéléphonie mobile correspondant particulièrement avantageux dans la mesure où celui-ci, en raison de son caractère tridimensionnel, présente une très grande souplesse d'utilisation ce qui permet d'envisager des applications très variées dans le domaine non seulement de la radiotéléphonie mobile, mais également de l'intercommunication d'objets meubles, des espaces d'intercommunication pouvant être subdivisés en sous-espaces d'intercommunication du fait même du pavage tridimensionnel et de l'allocation des groupes de fréquences correspondants de ces espaces et sous-espaces.

## Revendications

1. Procédé d'intercommunication par radiotéléphonie mobile, chaque radiotéléphone mobile étant adapté pour émettre et recevoir des messages sur un ensemble de fréquences discrètes de valeurs déterminées, caractérisé en ce que pour un espace d'intercommunication déterminé ledit procédé consiste :
   - à effectuer un pavage tridimensionnel de cet espace d'intercommunication en une pluralité de cellules d'intercommunication tridimensionnelles,

- à effectuer une allocation d'un groupe de fréquences de transmission prédéterminé à chacune des cellules dudit pavage, à deux cellules adjacentes étant alloué un groupe de fréquences distinct,
- à transmettre, à partir desdits radiotéléphones mobiles, des messages sur l'une au moins des fréquences allouées à chacune desdites cellules d'intercommunication.

2.  Procédé selon la revendication 1, caractérisé en ce que ledit pavage consiste à subdiviser l'espace d'intercommunication en cellules d'intercommunication élémentaires, deux cellules d'intercommunication élémentaires adjacentes ayant au moins un sommet, une arête ou une face en commun.

3.  Procédé selon la revendication 2, caractérisé en ce que lesdites cellules d'intercommunication élémentaires appartiennent au groupe des volumes formés par le cube, le cylindre hexagonal, la double croix, le cuboctaèdre, le dodécaèdre rhomboïdal, le dodécaèdre rhomboïdal étiré, le cocube, la pyramide, le tétraèdre venu de la pyramide.

4.  Procédé selon la revendication 2 ou 3, caractérisé en ce que ledit pavage tridimensionnel est soit un pavage dit régulier dans lequel les cellules successives dans une direction de référence dudit pavage tridimensionnel étant deux cellules adjacentes telles que la droite passant par le centre desdites cellules est parallèle à ladite direction de référence et qu'il n'existe aucune cellule décalée adjacente auxdites cellules adjacentes, toute cellule décalée présentant un centre dont l'abscisse selon cette direction de référence est comprise entre l'abscisse du centre desdites cellules successives, soit un pavage dit pseudo-régulier comportant des cellules successives et des cellules successives intermédiaires, deux cellules successives intermédiaires étant formées par rapport à deux cellules successives de façon telle qu'une troisième cellule adjacente auxdites deux cellules successives forme une cellule décalée comportant un centre dont l'abscisse, selon cette direction de référence, est comprise entre l'abscisse desdites cellules successives selon cette direction de référence et dont les ordonnées, après changement de repère centré sur le centre de la cellule successive dont l'abscisse par rapport à la direction de référence est la plus faible, sont respectivement positive et négative par rapport à une deuxième et une troisième direction de référence orthogonales à la direction de référence.

5.  Procédé selon la revendication 4, caractérisé en ce que l'étape d'allocation d'un groupe de fréquences à chaque cellule d'intercommunication du pavage consiste : pour un spectre S comportant N groupes de fréquences indépendants, N pair ou impair,
    - à allouer un groupe de fréquences distinct à chaque cellule d'intercommunication adjacente dans une première direction de référence Y'Y du pavage de l'espace d'intercommunication, lesdits groupes de fréquence dans la première direction étant choisis tels que les sauts de fréquence dans la première direction Y'Y aient pour valeur $s$, $s$ étant une valeur entière vérifiant la relation $s \in S = \{0,1...2n$ ou $2n+1\}$ suivant le cardinal du spectre de fréquence considéré,
    - à allouer un groupe de fréquences distinct à chaque cellule d'intercommunication adjacente dans une deuxième direction X'X du pavage de l'espace d'intercommunication, lesdits groupes de fréquence dans la deuxième direction étant choisis de façon que les sauts de fréquence dans la deuxième direction X'X aient pour valeur $r$, $r$ étant une valeur entière vérifiant la relation $r \in S = \{0,1...2n$ ou $2n+1\}$ suivant le cardinal du spectre de fréquence considéré,
    - à allouer un groupe de fréquences distinct à chaque cellule d'intercommunication adjacente dans une troisième direction ZZ' du pavage de l'espace d'intercommunication, en fonction du caractère régulier ou pseudo-régulier du pavage tridimensionnel, le saut de fréquence entre cellules successives dans ladite troisième direction ZZ' dans le cas d'un pavage régulier, ayant pour valeur $2m$, $2m$ étant un entier vérifiant la relation $2m \in S = \{0,1...2n$ ou $2n+1\}$ suivant le cardinal du spectre de fréquences considéré, et, ayant pour valeur dans le cas d'un pavage pseudo-régulier, $4m-r+s$, la valeur $4m-r+s$ étant un entier vérifiant la relation $4m-r+s \in S = \{0,1...2n$ ou $2n+1\}$ suivant le cardinal du spectre de fréquences considéré.

6.  Procédé selon la revendication 4, caractérisé en ce que l'étape d'allocation avec une périodicité N d'un groupe de fréquences à chaque cellule d'intercommunication du pavage consiste,
    - pour un spectre S comportant N groupes de fréquences indépendants, N pair ou impair,
    - à allouer un groupe de fréquences distinct à chaque cellule d'intercommunication adjacente dans une première direction de référence Y'Y du pavage de l'espace d'intercommunication, lesdits groupes de fréquences étant alloués par permutation avec une périodicité N = 2n+1 ou N = 2n+2 dans cette première direction de référence ;

- à allouer un groupe de fréquences distinct à chaque cellule d'intercommunication adjacente dans une deuxième direction de référence X'X du pavage de l'espace d'intercommunication, lesdits groupes de fréquences étant alloués avec une périodicité spatiale par permutation d'ordre m, entier, vérifiant la relation m.r = 0(mod $|S|$) où r est un entier tel que 1 < r < N ;
- à allouer un groupe de fréquences distinct à chaque cellule d'intercommunication adjacente dans une troisième direction de référence ZZ' du pavage de l'espace d'intercommunication, lesdits groupes de fréquences étant alloués, d'une part, pour un pavage régulier, avec une périodicité spatiale par permutation d'ordre k, vérifiant la relation p.k = 0 (mod $|S|$) où p est un entier tel que 1 < p < N, et d'autre part, pour un pavage pseudo-régulier avec une périodicité spatiale par permutation d'ordre 2k+r-1 vérifiant la relation
p.(2k+r-1) = 0(mod $|S|$).

7. Protocole d'allocation de groupes de fréquences aux cellules élémentaires d'un réseau tridimensionnel de radiotéléphonie mobile, l'espace d'intercommunication dudit réseau étant subdivisé en un pavage de cellules d'intercommunications élémentaires tridimensionnelles adjacentes ayant au moins un sommet, une arête ou une face en commun, caractérisé en ce que pour une bande de fréquences radioélectriques présentant un spectre S comportant N groupes de fréquences indépendants, N pair N = 2n+2 ou impair N = 2n+1, ledit protocole consiste :
   - à allouer un groupe de fréquences distinct à chaque cellule d'intercommunication élémentaire adjacente dans une première direction de référence Y'Y du pavage de l'espace d'intercommunication, ces groupes de fréquences étant alloués par permutation avec une périodicité N dans cette première direction de référence,
   - à allouer un groupe de fréquences distinct à chaque cellule d'intercommunication élémentaire adjacente dans une deuxième direction de référence X'X du pavage de l'espace d'intercommunication, lesdits groupes de fréquences étant alloués avec une périodicité spatiale par permutation d'ordre m, entier, vérifiant la relation m.r = 0 (mod $|S|$) ou $|S|$ cardinal de S = N, r étant un entier tel que 1 < r < N ;
   - à allouer un groupe de fréquences distinct à chaque cellule d'intercommunication adjacente dans une troisième direction de référence Z'Z du pavage de l'espace d'intercommunication, lesdits groupes de fréquences étant alloués, pour un pavage régulier pour lequel les cellules successives dans cette direction de référence, en l'absence de cellule décalée, une cellule décalée présentant un centre dont l'abscisse selon cette même direction de référence est comprise entre l'abscisse du centre de deux cellules successives, avec une périodicité spatiale par permutation d'ordre k vérifiant la relation p.k = 0 (mod $|S|$) où p est un entier tel que 1 <p < N, et, pour un pavage pseudo-régulier pour lequel celui-ci comporte des cellules successives et des cellules successives intermédiaires, deux cellules successives étant deux cellules successives d'un pavage régulier et deux cellules successives intermédiaires étant formées par rapport à deux cellules successives de façon telle que toute troisième cellule adjacente aux deux cellules successives forme une cellule décalée comportant un centre dont l'abscisse, selon cette direction de référence, est comprise entre l'abscisse des cellules successives et dont les ordonnées successives, après changement de repère centré sur le centre de la cellule successive dont l'abscisse par rapport à la direction de référence est la plus faible, sont respectivement positive et négative par rapport à une deuxième et une troisième direction de référence orthogonales à cette direction de référence, avec une périodicité spatiale par permutation d'ordre 2k+r-1, vérifiant la relation p.(2k+r-1) = o (mod $|S|$, $|S|$ désignant le cardinal de S = N.

8. Réseau tridimensionnel d'intercommunication en radiotéléphonie mobile, caractérisé en ce que celui-ci comporte un pavage tridimensionnel de l'espace d'intercommunication selon une pluralité de cellules d'intercommunication élémentaires tridimensionnelles, chaque cellule étant munie d'une station de base émetteur-récepteur à laquelle est alloué un groupe de fréquences d'émission-réception, à deux cellules d'intercommunication élémentaires adjacentes étant alloué un groupe de fréquences distinct.

9. Réseau selon la revendication 8, caractérisé en ce que ledit espace d'intercommunication est subdivisé en sous-espaces d'intercommunication distincts, chaque sous-espace comportant un pavage tridimensionnel spécifique comprenant au moins une cellule d'intercommunication élémentaire d'un type déterminé.

10. Réseau selon la revendication 9, caractérisé en ce que toutes les cellules d'intercommunication élémentaires formant les espaces d'intercommunication sont semblables et d'un même type.

11. Réseau selon la revendication 10, caractérisé en ce que les cellules semblables sont homothétiques par rapport à leur centre, chaque station de base comportant un émetteur dont le rapport de puissance d'émission pour des cellules homothétiques est fonction du rapport d'homothétie.

FIG.1a.

FIG.1b.

FIG.2a

FIG.2b.

FIG.2c.

FIG.2d.

FIG.2e.

FIG.2f.

FIG.g.

FIG.2h.

FIG.3a.

FIG.3b.

FIG.3c.

FIG.3d.

FIG.3e.

FIG.3f.

FIG.3g.

FIG.3h.

FIG.4a.
PAVAGE RÉGULIER

$y'''$  $C_1'''$  $C_2'''$  $C_3'''$  $C_4'''$  $y'''$

$y''$  $C_1''$  $C_2''$  $C_3''$  $C_4''$  $C_5''$  $y''$

$y'$  $C_1'$  $C_2'$  $C_3'$  $C_4'$  $C_5'$  $C_6'$  $C_7'$  $y'$

$y$  $C_1$  $C_2$  $C_3$  $C_4$  $C_5$  $C_6$  $C_7$  $y$

$z'$  $z''$  $z^{\nu}$  $z'''$

CELLULES SUCCESSIVES
INTERMÉDIAIRES  $y'''$  $C_1''$  $C_2''$  $y''$

CELLULES SUCCESSIVES  $y''$  $C_1'$  $C_2'$  $y'$

CELLULES SUCCESSIVES
INTERMÉDIAIRES  $C_1$  $IC_2$

$z'$  $z''$  $z^{\nu}$  $z^{\nu}$

$x'$  $x''$  $x'''$

$y'''$  $y'''$

$y''$  $y''$

FIG.4b.
PAVAGE PSEUDO
RÉGULIER

$y'$  $y'$

$x'$  $x''$  $x'''$

20

FIG.5a.

# FIG.5b.

ALLOCATION OPTIMALE POUR LE CUBE

# FIG.5c.

ALLOCATION OPTIMALE POUR LE CUBE
SATISFAISANT À LA CONDITION DU CARRÉ ET CUBE LATIN

## FIG.5d.

ALLOCATION OPTIMALE POUR
CYLINDRE HEXAGONALE

## FIG.5e.

ALLOCATION OPTIMALE POUR CYLINDRE
HEXAGONALE SATISFAISANT À LA CONDITION DE CARRÉ OU CUBE LATIN

# FIG.5f.
ALLOCATION OPTIMALE POUR LE
CUBOCTAÈDRE

# FIG.5g
ALLOCATION OPTIMALE POUR LA DOUBLE CROIX
CONDITION CARRÉ OU CUBE LATIN SATISFAITE

FIG.5h.
ALLOCATION OPTIMALE DODÉCAÈDRE RHOMBOÏDAL

FIG.5i
ALLOCATION OPTIMALE DODÉCAÈDRE
RHOMBOÏDAL CONDITION CARRÉ LATIN SATISFAIT

EP 0 675 662 A1

FIG.5k.

ALLOCATION OPTIMALE DODÉCAÈDRE RHOMBOÏDAL ÉTIRÉ
CONDITION CUBE OU CARRÉ LATIN SATISFAITE

FIG.5j.

ALLOCATION OPTIMALE DODÉCAÈDRE RHOMBOÏDAL ÉTIRÉ

## FIG.6a.

Allocation 3D utilisant 5 groupes de fréquences. Configuration en l'absence d'évolution dans la taille des cellules

## FIG.6b.

Représentation de la répartition des éléments de chaque groupe sur la bande de fréquences. Le pas est de 0,025 MHz

## FIG.6c.

Allocation 3D utilisant 10 groupes de fréquences. En l'absence d'évolution dans les tailles des cellules mais en tenant compte de la contrainte des canaux 1-adjacents.

## FIG.6d.

$(g_6,g_6')$ $(g_8,g_8')$ $(g_{10},g_{10}')$

$(g_8,g_8')$ $(g_{10},g_{10}')$ $(g_1,g_1')$

$(g_{10},g_{10}')$ $(g_1,g_1')$ $(g_3,g_3')$

$(g_9,g_9')$ $(g_{11},g_{11}')$ $(g_2,g_2')$

$(g_{11},g_{11}')$ $(g_2,g_2')$ $(g_4,g_4')$

$(g_2,g_2')$ $(g_4,g_4')$ $(g_6,g_6')$

$(g_8,g_8')$ $(g_{10},g_{10}')$ $(g_1,g_1')$

$(g_{10},g_{10}')$ $(g_1,g_1')$ $(g_3,g_3')$

$(g_1,g_1')$ $(g_3,g_3')$ $(g_5,g_5')$

ALLOCATION 3D UTILISANT 11 GROUPES DE FRÉQUENCES AVEC UNE ÉVOLUTION DANS LES TAILLES DES CELLULES ET UNE POSSIBLE COHABITATION DE DEUX TAILLES DIFFERENTES DE CELLULES. LA CONFIGURATION NE TIENT PAS COMPTE DES CONTRAINTES CANAUX 1-ADJACENTS. ALLOCATION AVANT LA DIVISION CELLULAIRE

## FIG.6g.

$(g_6,g_6')$ $(g_1,g_1')$ $(g_2,g_2')$

$(g_1,g_1')$ $(g_2,g_2')$ $(g_3,g_3')$

$(g_2,g_2')$ $(g_3,g_3')$ $(g_4,g_4')$

$(g_2,g_2')$ $(g_3,g_3')$ $(g_4,g_4')$

$(g_3,g_3')$ $(g_4,g_4')$ $(g_5,g_5')$

$(g_4,g_4')$ $(g_5,g_5')$ $(g_6,g_6')$

$(g_5,g_5')$ $(g_6,g_6')$ $(g_1,g_1')$

$(g_6,g_6')$ $(g_1,g_1')$ $(g_2,g_2')$

$(g_1,g_1')$ $(g_2,g_2')$ $(g_3,g_3')$

ALLOCATION 3D UTILISANT 6 GROUPES DE FRÉQUENCES AVEC UNE CONFIGURATION N'ENVISAGEANT AUCUNE ÉVOLUTION DANS LES TAILLES DES CELLULES ET NE TENANT PAS COMPTE DES INTERFÉRENCES DES CANAUX 1-ADJACENTS

EP 0 675 662 A1

# FIG.6e.

ALLOCATION CONFORME À CELLE DE LA FIGURE 6c APRÈS LA DIVISION CELLULAIRE AVEC COHABITATION DES DEUX TAILLES DE CELLULES

FIG.6f. ALLOCATION CONFORME A LA CONFIGURATION (6)

ALLOCATION 3D UTILISANT 10 GROUPES DE FRÉQUENCES
EN L'ABSENCE D'ÉVOLUTION DANS LA TAILLE DES
CELLULES MAIS TENANT COMPTE DES INTERFÉRENCES
DES CANAUX 1_ADJACENTS

FIG.6h.

ALLOCATION A L'ORDRE O, AVEC ÉVOLUTION DANS LES TAILLES
DES CELLULES ET COHABITATION DE DEUX TAILLES
DIFFÉRENTES DE CELLULES, MAIS SANS PRISE EN COMPTE
DES INTERFÉRENCES DES CANAUX 1_ADJACENTS

FIG.6i.

REPRÉSENTATION DE L'ALLOCATION CONFORMÉMENT A LA CONFIGURATION (5) LORSQUE LA DIVISION ATTEINT L'ORDRE 1

FIG.6j.

# FIG.7a.

# FIG.7b.

**Office européen
des brevets**

**RAPPORT DE RECHERCHE EUROPEENNE**

Numero de la demande

EP 95 40 0682

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | 43RD IEEE VEHICULAR TECHNOLOGY CONFERENCE, 18 Mai 1993 SECAUCUS, US, pages 156-159, SONG ET AL. 'A Fixed Channel Assignment Plan for Three-dimensional Cellular System' * alinéa 2 - alinéa 3; figures 1-3 * | 1-4,8 | H04Q7/36 |
| X | IEEE INTERNATIONAL CONFERENCE ON COMMUNICATIONS, vol. 1, 23 Juin 1991 DENVER,US, pages 16-22, HASHEMI ET AL. 'A Fixed Channel Assignment Algorithm for Three-Dimensional Frequency Reuse Environments' * le document en entier * | 1-4,8 | |
| A | IEEE TRANSACTIONS ON COMMUNICATIONS, vol. 36, no. 6, Juin 1988 NEW YORK US, pages 765-767, D NES ET AL. 'Frequency Allocation for a Mobile Radio Telephone System' * le document en entier * | 1,7,8 | |

DOMAINES TECHNIQUES RECHERCHES (Int.Cl.6)

H04Q

Le présent rapport a été établi pour toutes les revendications

| Lieu de la recherche | Date d'achèvement de la recherche | Examinateur |
|---|---|---|
| LA HAYE | 4 Juillet 1995 | Janyszek, J-M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)